(19) Europäisches Patentamt
European Patent Office
Office européen des brevets

(11) **EP 4 525 443 A1**

(12) **EUROPEAN PATENT APPLICATION**
published in accordance with Art. 153(4) EPC

(43) Date of publication:
**19.03.2025 Bulletin 2025/12**

(21) Application number: **23838741.9**

(22) Date of filing: **30.06.2023**

(51) International Patent Classification (IPC):
*H04N 19/154* (2014.01)

(52) Cooperative Patent Classification (CPC):
**H04N 19/119; H04N 19/154; H04N 19/169; H04N 19/96**

(86) International application number:
**PCT/CN2023/104494**

(87) International publication number:
**WO 2024/012249 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.07.2022 CN 202210829379**

(71) Applicant: **Huawei Technologies Co., Ltd.**
**Shenzhen, Guangdong 518129 (CN)**

(72) Inventors:
• **CHEN, Huanbang**
**Shenzhen, Guangdong 518129 (CN)**
• **ZHU, Chen**
**Shanghai 200240 (CN)**
• **ZHAO, Yin**
**Shenzhen, Guangdong 518129 (CN)**
• **SONG, Li**
**Shanghai 200240 (CN)**

(74) Representative: **Pfenning, Meinig & Partner mbB**
**Patent- und Rechtsanwälte**
**Theresienhöhe 11a**
**80339 München (DE)**

(54) **METHOD AND APPARATUS FOR CODING IMAGE INCLUDING TEXT, AND METHOD AND APPARATUS FOR DECODING IMAGE INCLUDING TEXT**

(57) This application provides a word-including picture encoding method and apparatus, and a word-including picture decoding method and apparatus. The word-including picture encoding method in this application includes: obtaining a word area in a first picture, where the word area includes at least one character; filling the word area to obtain a word filling area, where the height or a width of the word filling area is n times a preset size, and n≥1; obtaining a second picture based on the word filling area; and encoding the second picture and word alignment side information to obtain a first bitstream, where the word alignment side information includes the height or the width of the word filling area. This application can avoid, as much as possible, classifying pixels of a same character into different CUs, so as to improve accuracy and efficiency of word content compression.

800

| Obtain a word area in a first picture, where the word area includes at least one character | 801 |

| Fill the word area to obtain a word filling area, where a height or a width of the word filling area is n times a preset size, and n≥1 | 802 |

| Obtain a second picture based on the word filling area | 803 |

| Encode the second picture and word alignment side information to obtain a first bitstream, where the word alignment side information includes the height or the width of the word filling area | 804 |

FIG. 8

EP 4 525 443 A1

Processed by Luminess, 75001 PARIS (FR)

## Description

This application claims priority to Chinese Patent Application No. 202210829379.1, filed with the China National Intellectual Property Administration on July 15, 2022 and entitled "WORD-INCLUDING PICTURE ENCODING METHOD AND APPARATUS, AND WORD-INCLUDING PICTURE DECODING METHOD AND APPARATUS", which is incorporated herein by reference in its entirety.

## TECHNICAL FIELD

This application relates to video encoding and decoding technologies, and in particular, to a word-including picture encoding method and apparatus, and a word-including picture decoding method and apparatus.

## BACKGROUND

In a high efficiency video coding (High Efficiency Video Coding, HEVC) encoder, an input picture is first split into a plurality of coding tree units (Coding Tree Units, CTUs) that have a same size and that do not overlap each other. A size of the CTU may be determined by the encoder, and a maximum size of the CTU may be $64 \times 64$. One CTU may be directly used as one coding unit (Coding Unit, CU), or may be further split into a plurality of CUs of a smaller size in a quad-tree recursive split manner. A CU split depth is determined based on a rate-distortion cost obtained through calculation. The encoder compares and balances different split modes, to select a split mode with a lowest rate-distortion cost for encoding. Finally, a CU located at a leaf node of a quad-tree is a basic unit for the encoder to perform subsequent prediction, transform, and encoding.

However, when the foregoing encoding manner is applied to a picture including word content, pixels of a same word may be classified into different CTUs or CUs, resulting in low accuracy and low efficiency of word content compression during prediction, transform, and quantization.

## SUMMARY

This application provides a word-including picture encoding method and apparatus, and a word-including picture decoding method and apparatus, to avoid, as much as possible, classifying pixels of a same character into different CUs, so as to improve accuracy and efficiency of word content compression.

According to a first aspect, this application provides a word-including picture encoding method, including: obtaining a word area in a first picture, where the word area includes at least one character; filling the word area to obtain a word filling area, where a height or a width of the word filling area is n times a preset size, and $n \geq 1$; obtaining a second picture based on the word filling area; and encoding the second picture and word alignment side information to obtain a first bitstream, where the word alignment side information includes the height or the width of the word filling area.

In this embodiment of this application, the word area obtained through recognition in the original picture is filled, so that a size of the obtained word filling area matches a size of a CU for encoding, to implement alignment between the word filling area and the CU, so as to avoid, as much as possible, classifying pixels of a same character into different CUs, and improve accuracy and efficiency of word content compression.

The first picture may be an independent image, or may be any video frame in a video. This is not specifically limited. In this embodiment of this application, the first picture may include the word area. There may be only one or more word areas. A quantity of word areas may depend on a quantity of characters included in the first picture, a character distribution rule, a character size, and the like. This is not specifically limited. In addition, the word area may include one character, that is, the word area includes only one character; the word area includes one character row, and the character row includes a plurality of characters; or the word area includes one character column, and the character column includes a plurality of characters. The foregoing character may be a Chinese character, a Chinese phonetic letter, an English letter, a digit, or the like. This is not specifically limited.

In this embodiment of this application, the word area in the first picture may be obtained by using the following four methods.

In a first method, character recognition is performed on the first picture to obtain the word area.

Binarization and corrosion may be first performed on the first picture. Usually, in a binarized picture, a sample corresponding to a word area is white, and a sample corresponding to a non-word area is black. Corrosion may be used to deal with pixel adhesion between characters. Then, horizontal projection is performed on a picture obtained through the binarization and corrosion, and a quantity of white samples (corresponding to the word area) in a horizontal direction is calculated. A quantity of white samples on a horizontal line having a character is not 0. Therefore, all character rows in the picture can be obtained based on this.

The following operations are performed on each character row: extracting a connected component (the connected component refers to a continuous white sample area, one character is a connected component, and correspondingly, one character row may have a plurality of connected components); and selecting a character box of a proper size. When the character box includes only one character, a size of the character box is greater than or equal to a size of a largest connected component in a character row, and all characters in a same character row use character boxes of a same size. When the character box includes one character row or character column, a size of the character box is greater than or equal to a sum of sizes of all connected components in the character row or character column. For example, a connected component of a character 1 in a character row occupies a pixel space of 6 (width)×10 (height), and a connected component of a character 2 occupies a pixel space of 11×8. In this case, a character box of at least 11×10 needs to be selected to respectively include the two characters, or a character box of at least 17×10 needs to be selected to include the two characters of the character row. In this embodiment of this application, an area covered by the character box in the first picture may be referred to as the word area, that is, the word area and the character box refer to a same area range in the first picture.

Therefore, the first picture may be recognized by using the foregoing method, to obtain the word area.

In a second method, character recognition is performed on the first picture to obtain an intermediate word area, where the intermediate word area includes a plurality of character rows; and row splitting is performed on the intermediate word area by character row to obtain the word area.

A difference from the first method lies in that, in the second method, the intermediate word area may be obtained through character recognition, where the intermediate word area may include the plurality of character rows; and then row splitting is performed on the intermediate word area to obtain a plurality of word areas of which each includes only one character row. The method may be used in a case in which characters are arranged horizontally. For example, a plurality of characters are arranged from left to right and from top to bottom.

In a third method, character recognition is performed on the first picture to obtain an intermediate word area, where the intermediate word area includes a plurality of character columns; and column splitting is performed on the intermediate word area by character column to obtain the word area.

A difference from the first method lies in that, in the third method, the intermediate word area may be obtained through character recognition, where the intermediate word area may include the plurality of character rows; and then column splitting is performed on the intermediate word area to obtain a plurality of word areas of which each includes only one character column. The method may be used in a case in which characters are arranged vertically. For example, a plurality of characters are arranged from top to bottom and from left to right.

In a fourth method, character recognition is performed on the first picture to obtain an intermediate word area, where the intermediate word area includes a plurality of character rows or a plurality of character columns; and row splitting and column splitting are performed on the intermediate word area by character to obtain the word area.

A difference from the first method lies in that, in the fourth method, the intermediate word area may be obtained through character recognition, where the intermediate word area may include the plurality of character rows or the plurality of character columns; and then row splitting and column splitting are performed on the intermediate word area to obtain a plurality of word areas of which each includes only one character. The method may be used in a case in which characters are arranged horizontally or vertically. For example, a plurality of characters are arranged from top to bottom and from left to right. For another example, a plurality of characters are arranged from top to bottom and from left to right.

It should be noted that, in addition to the foregoing four methods, in this embodiment of this application, another method may be used to obtain the word area in the first picture. This is not specifically limited.

The preset size may be one of 8, 16, 32, and 64. In this embodiment of this application, a related encoding and decoding method may be used to encode a picture. In the related encoding and decoding method, the picture usually needs to be split to obtain a CU, and subsequent processing is performed based on the CU. A size of the CU may be one of 8, 16, 32, and 64. In this embodiment of this application, the preset size may be determined based on the size of the CU. For example, if the size of the CU is 8, the preset size may be 8 or 16; or if the size of the CU is 32, the preset size may be 32.

In this embodiment of this application, the word filling area may be obtained by filling the word area. Therefore, the height of the word filling area is greater than or equal to a height of the word area, and/or the width of the word filling area is greater than or equal to a width of the word area. The foregoing case in which the height of the word filling area is equal to a height of the word area, and/or the width of the word filling area is equal to a width of the word area may mean that the height and/or the width of the word area is just n times the preset size. Therefore, the word area does not need to be filled, and a subsequent step is performed by using the word area directly as the word filling area. In addition, as described in step 801, when the word area is obtained, heights and/or widths of word areas of characters in a same row or a same column are kept consistent. Correspondingly, when the word filling area is obtained, heights and/or widths of word areas in a same row or a same column are also kept consistent. In this way, it can be ensured that the height of the word filling area is consistent with a height of the CU obtained through splitting in the related encoding and decoding method, or/and the width of the word filling area is consistent with a width of the CU obtained through splitting in the related encoding and decoding method. In this embodiment of this application, the foregoing effect may also be referred to as that the word filling area is aligned with the CU obtained through splitting in the related encoding and decoding method.

In a possible implementation, the height of the word filling area is n times the preset size. For example, if the height of the word area is 10, and the preset size is 8, the height of the word filling area may be 16 (twice of 8). For another example, if the height of the word area is 10, and the preset size is 16, the height of the word filling area may be 16 (one time of 16).

In a possible implementation, the width of the word filling area is n times the preset size. For example, if the width of the word area is 17, and the preset size is 8, the width of the word filling area may be 24 (three times of 8). For another example, if the width of the word area is 17, and the preset size is 16, the width of the word filling area may be 32 (twice of 16).

In a possible implementation, the height of the word filling area is n1 times the preset size, and the width of the word filling area is n2 times the preset size, where n1 and n2 may be equal or may not be equal. For example, if a size of the word area is 6 (width)×10 (height), and the preset size is 8, a size of the word filling area may be 8 (one time of 8)×16 (twice of 8). For another example, if a size of the word area is 17×10, and the preset size is 16, a size of the word filling area may be 32 (twice of 16)×16 (one time of 16).

In this embodiment of this application, the following three methods may be used to fill the word area to obtain the word filling area.

In a first method, the height of the word filling area is obtained based on the height of the word area, where the height of the word filling area is n times the preset size; and the word area is filled in a vertical direction of the word area to obtain the word filling area, where a height of filling is a difference between the height of the word filling area and the height of the word area.

As described above, the height of the word filling area is greater than the height of the word area, and the height of the word filling area is n times the preset size. Based on this, the height of the word filling area may be obtained based on the height of the word area. Refer to the foregoing example. Optionally, if the height of the word area is exactly n times the preset size, the word area does not need to be filled. In this case, the height of the word filling area is equal to the height of the word area. After the height of the word filling area is obtained, the word area may be filled in the vertical direction of the word area (for example, on an upper side, in the middle, or on a lower side of the word area, which is not specifically limited), where the height of filling is the difference between the height of the word filling area and the height of the word area. For example, if the height of the word filling area is 16, and the height of the word area is 10, the height of filling is 6. A pixel value of filling may be a pixel value of a background pixel other than a character pixel in the word area, and the pixel value of filling may alternatively be a preset pixel value, for example, 0 or 255. This is not specifically limited.

In a second method, the width of the word filling area is obtained based on the width of the word area, where the width of the word filling area is n times the preset size; and the word area is filled in a horizontal direction of the word area to obtain the word filling area, where a width of filling is a difference between the width of the word filling area and the width of the word area.

As described above, the width of the word filling area is greater than the width of the word area, and the width of the word filling area is n times the preset size. Based on this, the width of the word filling area may be obtained based on the width of the word area. Refer to the foregoing example. Optionally, if the width of the word area is exactly n times the preset size, the word area does not need to be filled. In this case, the width of the word filling area is equal to the width of the word area. After the width of the word filling area is obtained, the word area may be filled in the horizontal direction of the word area (for example, on a left side, in the middle, or on a right side of the word area, which is not specifically limited), where the width of filling is the difference between the width of the word filling area and the width of the word area. For example, if the width of the word filling area is 24, and the width of the word area is 17, the width of filling is 7. A pixel value of filling may be a pixel value of a background pixel other than a character pixel in the word area, and the pixel value of filling may alternatively be a preset pixel value, for example, 0 or 255. This is not specifically limited.

A third method may be a combination of the first method and the second method, that is, after the height and the width of the word filling area are obtained, the first two methods are respectively used to fill the word area in the vertical direction and the horizontal direction of the word area, to obtain the word filling area.

It can be learned that, the size of the word filling area obtained through filling is in a multiple relationship with the size of the CU. Therefore, after such a word filling area is split, the word filling area may cover a complete CU, that is, a case in which the word filling area covers a part of a CU does not occur, and a same CU does not cover two word filling areas, thereby implementing alignment between the word area and the CU in splitting.

In this embodiment of this application, a new picture, namely, the second picture, may be obtained based on the word filling area. The second picture includes the character in the original first picture. The obtaining a second picture includes the following four cases:

1. When there is only one word filling area, the word filling area is used as the second picture.

In a case in which there is only one word filling area, the word filling area may be directly used as the second picture.

2. When there are a plurality of word filling areas, and each of the word filling areas includes one character row, the plurality of word filling areas are spliced from top to bottom to obtain the second picture.

One word filling area includes one character row. In this case, the word filling areas to which a plurality of character rows respectively belong may be spliced from top to bottom based on distribution of character rows in the first picture, to be specific, a word filling area to which a character row arranged at the top in the first picture belongs is also spliced at the top, a word filling area to which a character row arranged in the second row in the first picture is also spliced in the second row, and the rest may be deduced by analogy. It should be noted that, in this embodiment of this application, splicing may be alternatively performed from bottom to top, and a splicing order is not specifically limited.

3. When there are a plurality of word filling areas, and each of the word filling areas includes one character column, the plurality of word filling areas are spliced from left to right to obtain the second picture.

One word filling area includes one character column. In this case, the word filling areas to which a plurality of character columns respectively belong may be spliced from left to right based on distribution of character columns in the first picture, to be specific, a word filling area to which a character column arranged on the leftmost side in the first picture belongs is also spliced on the leftmost side, a word filling area to which a character column arranged in the second column in the first picture is also spliced in the second column, and the rest may be deduced by analogy. It should be noted that, in this embodiment of this application, splicing may be alternatively performed from right to left, and a splicing order is not specifically limited.

4. When there are a plurality of word filling areas, and each of the word filling areas includes one character, the plurality of word filling areas are spliced from left to right and from top to bottom to obtain the second picture, where a plurality of word filling areas in a same row have a same height, or a plurality of word filling areas in a same column have a same width.

One word filling area includes one character. In this case, the word filling areas to which a plurality of characters respectively belong may be spliced from left to right and from top to bottom based on distribution of characters in the first picture. An arrangement order of the word filling areas is consistent with an arrangement order of the characters included in the word filling areas in the first picture, and the plurality of word filling areas in the same row have the same height, or the plurality of word filling areas in the same column have the same width.

It should be noted that, in this embodiment of this application, splicing may be alternatively performed in another order, and a splicing order is not specifically limited.

In this embodiment of this application, standard video encoding or IBC encoding may be performed on the second picture. This is not specifically limited. When IBC encoding is used, if a character in a CU being currently encoded already appears in an encoded CU, the encoded CU may be determined as a predicted block of the CU being currently encoded. In this way, a probability that an obtained residual block is 0 is very high, thereby improving encoding efficiency of the current CU. The word alignment side information may be encoded in an exponential Golomb encoding manner, or may be encoded in another encoding manner. This is not specifically limited either. In this embodiment of this application, the height or the width of the word filling area may be directly encoded, or the times n of the height or the width of the word filling area to the preset size may be encoded. This is not specifically limited.

Optionally, the word alignment side information further includes the height and the width of the word area, and a horizontal coordinate and a vertical coordinate of a pixel in an upper left corner of the word area in the first picture. The information can assist a decoder side in restoring the word area in a reconstructed picture, thereby improving decoding efficiency.

In a possible implementation, a pixel value in the word area in the first picture may be filled with a preset pixel value to obtain a third picture; and the third picture is encoded to obtain a second bitstream.

In the foregoing steps, the word area is recognized from the first picture, then the word area is filled to obtain the word filling areas, and the second picture is obtained by splicing the word filling areas. It can be learned that the second picture includes only character content in the first picture, and the second picture is separately encoded. However, in addition to the character, the first picture includes other content. Therefore, to maintain integrity of the picture, other picture content other than the character further needs to be processed and encoded.

In this embodiment of this application, a pixel value of a pixel of the recognized word area in the original first picture may be filled with the preset pixel value (for example, 0, 1, or 255, which is not limited). This is equivalent to removing the word area from the first picture and replacing the pixel value with a pixel value of a non-character pixel value. A difference between the third picture obtained in this way and the first picture is that pixel values of the word area are different. Standard video encoding or IBC encoding may also be performed on the third picture. This is not specifically limited.

According to a second aspect, this application provides a word-including picture decoding method, including: obtaining a bitstream; decoding the bitstream to obtain a first picture and word alignment side information, where the word alignment side information includes a height or a width of a word filling area included in the first picture, the height or width of the word filling area is n times a preset size, and $n \geq 1$; obtaining the word filling area based on the first picture and the height or the width of the word filling area; and obtaining a word area in a to-be-reconstructed picture based on the word filling area.

In this embodiment of this application, alignment information of the word area may be obtained by parsing the bitstream, to obtain a character filling area including a character. A size of the character filling area matches a size of a CU for decoding, to implement alignment between the word filling area and the CU, so as to improve accuracy and efficiency of word content compression.

A decoder side may obtain the first picture and the word alignment side information through decoding. A decoding manner may correspond to an encoding manner used by an encoder side. The encoder side may encode a picture by using standard video encoding or IBC encoding, and the decoder side may decode the bitstream by using standard video decoding or IBC decoding to obtain the reconstructed picture. The encoder side encodes word alignment side information by using exponential Golomb encoding, and the decoder side may decode the bitstream by using exponential Golomb decoding to obtain the word alignment side information.

The height or width of the word filling area is n times the preset size, where n≥1; and the preset size is one of 8, 16, 32, and 64. For details, refer to the following descriptions in step 802. Details are not described herein again.

After determining the height or the width of the word filling area, the decoder side may extract a corresponding pixel value from the first picture based on the height or the width to obtain the word filling area.

In this embodiment of this application, the word alignment side information further includes a height and a width of the word area. Therefore, based on the height and the width of the word area, a corresponding pixel value may be extracted from the word filling area to obtain the word area in the to-be-reconstructed picture. The word area corresponds to the word area in step 801, and may include one character; may include one character row, and the character row includes a plurality of characters; or may include one character column, and the character column includes a plurality of characters.

In a possible implementation, the decoder side may decode the bitstream to obtain a second picture, and obtain the to-be-reconstructed picture based on the word area and the second picture.

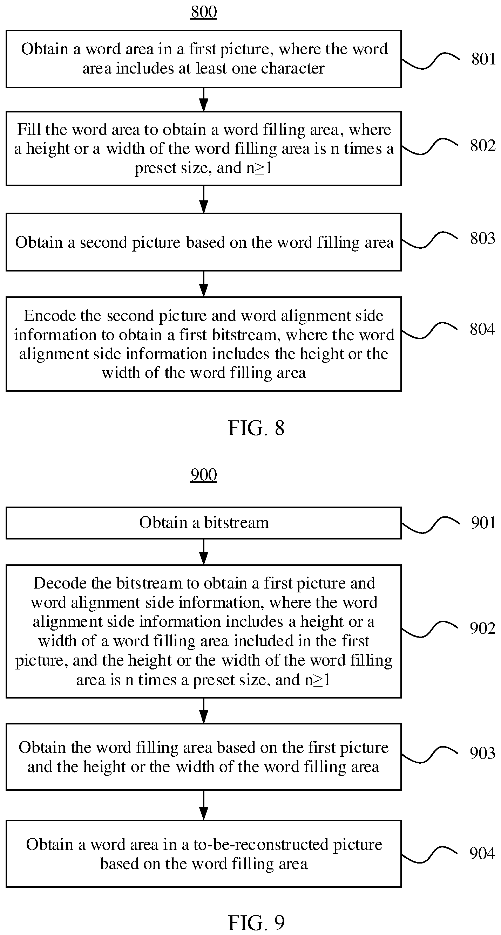

The word alignment side information further includes the height and the width of the word area, and a horizontal coordinate and a vertical coordinate of a pixel in an upper left corner of the word area. Based on this, a replacement area in the second picture may be determined based on the height and the width of the word area and the horizontal coordinate and the vertical coordinate of the pixel in the upper left corner of the word area; and a pixel value in the replacement area is filled with a pixel value in the word area to obtain the to-be-reconstructed picture. The process may be reverse to the process of obtaining the third picture in the embodiment of the first aspect, that is, filling the word area into the second picture (corresponding to the third picture in the embodiment of the first aspect), to obtain the reconstructed picture (corresponding to a first picture in an embodiment shown in FIG. 8). After a horizontal coordinate and a vertical coordinate of the pixel in the upper left corner of the word area in the second picture, and the height and the width of the word area are obtained, the replacement area in the second picture may be determined, and then a pixel value in a filling area is filled with the pixel value of the word area. This is equivalent to removing the replacement area from the second picture and replacing the pixel value in the filling area with the pixel value of the word area.

According to a third aspect, this application provides an encoding apparatus, including: an obtaining module, configured to obtain a word area in a first picture, where the word area includes at least one character; a filling module, configured to: fill the word area to obtain a word filling area, where a height or a width of the word filling area is n times a preset size, and n≥1; and obtain a second picture based on the word filling area; and an encoding module, configured to encode the second picture and word alignment side information to obtain a first bitstream, where the word alignment side information includes the height or the width of the word filling area.

In a possible implementation, the filling module is specifically configured to: obtain the height of the word filling area based on a height of the word area, where the height of the word filling area is n times the preset size; and fill the word area in a vertical direction of the word area to obtain the word filling area, where a height of filling is a difference between the height of the word filling area and the height of the word area.

In a possible implementation, the filling module is specifically configured to: obtain the width of the word filling area based on a width of the word area, where the width of the word filling area is n times the preset size; and fill the word area in a horizontal direction of the word area to obtain the word filling area, where a width of filling is a difference between the width of the word filling area and the width of the word area.

In a possible implementation, the word area includes one character; the word area includes one character row, and the character row includes a plurality of characters; or the word area includes one character column, and the character column includes a plurality of characters.

In a possible implementation, the obtaining module is specifically configured to perform character recognition on the first picture to obtain the word area.

In a possible implementation, the obtaining module is specifically configured to: perform character recognition on the first picture to obtain an intermediate word area, where the intermediate word area includes a plurality of character rows; and perform row splitting on the intermediate word area by character row to obtain the word area.

In a possible implementation, the obtaining module is specifically configured to: perform character recognition on the first picture to obtain an intermediate word area, where the intermediate word area includes a plurality of character columns; and perform column splitting on the intermediate word area by character column to obtain the word area.

In a possible implementation, the obtaining module is specifically configured to: perform character recognition on the first picture to obtain an intermediate word area, where the intermediate word area includes a plurality of character rows or a plurality of character columns; and perform row splitting and column splitting on the intermediate word area by character to obtain the word area.

In a possible implementation, the filling module is specifically configured to: when there is only one word filling area, use the word filling area as the second picture.

In a possible implementation, the filling module is specifically configured to: when there are a plurality of word filling areas, and each of the word filling areas includes one character row, splice the plurality of word filling areas from top to bottom to obtain the second picture.

In a possible implementation, the filling module is specifically configured to: when there are a plurality of word filling areas, and each of the word filling areas includes one character column, splice the plurality of word filling areas from left to right to obtain the second picture.

In a possible implementation, the filling module is specifically configured to: when there are a plurality of word filling areas, and each of the word filling areas includes one character, splice the plurality of word filling areas from left to right and from top to bottom to obtain the second picture, where a plurality of word filling areas in a same row have a same height, or a plurality of word filling areas in a same column have a same width.

In a possible implementation, the word alignment side information further includes the height and the width of the word area, and a horizontal coordinate and a vertical coordinate of a pixel in an upper left corner of the word area in the first picture.

In a possible implementation, the preset size is one of 8, 16, 32, and 64.

In a possible implementation, the filling module is further configured to fill a pixel value in the word area in the first picture with a preset pixel value to obtain a third picture; and the encoding module is further configured to encode the third picture to obtain a second bitstream.

According to a fourth aspect, this application provides a decoding apparatus, including: an obtaining module, configured to obtain a bitstream; a decoding module, configured to decode the bitstream to obtain a first picture and word alignment side information, where the word alignment side information includes a height or a width of a word filling area included in the first picture, the height or width of the word filling area is n times a preset size, and $n \geq 1$; and a reconstruction module, configured to: obtain the word filling area based on the first picture and the height or the width of the word filling area; and obtain a word area in a to-be-reconstructed picture based on the word filling area.

In a possible implementation, the word alignment side information further includes a height and a width of the word area; and the reconstruction module is specifically configured to extract a corresponding pixel value from the word filling area based on the height and the width of the word area to obtain the word area.

In a possible implementation, the decoding module is further configured to decode the bitstream to obtain a second picture; and the reconstruction module is further configured to obtain the to-be-reconstructed picture based on the word area and the second picture.

In a possible implementation, the word alignment side information further includes a horizontal coordinate and a vertical coordinate of a pixel in an upper left corner of the word area; and the reconstruction module is specifically configured to: determine a replacement area in the second picture based on the height and the width of the word area and the horizontal coordinate and the vertical coordinate of the pixel in the upper left corner of the word area; and fill a pixel value in the replacement area with a pixel value in the word area to obtain the to-be-reconstructed picture.

In a possible implementation, the word area includes one character; the word area includes one character row, and the character row includes a plurality of characters; or the word area includes one character column, and the character column includes a plurality of characters.

In a possible implementation, the preset size is one of 8, 16, 32, and 64.

According to a fifth aspect, this application provides an encoder, including: one or more processors; and a memory, configured to store one or more programs. When the one or more programs are executed by the one or more processors, the one or more processors are enabled to implement the method according to any one of the possible implementations of the first aspect.

According to a sixth aspect, this application provides a decoder, including: one or more processors; and a memory, configured to store one or more programs. When the one or more programs are executed by the one or more processors, the one or more processors are enabled to implement the method according to any one of the possible implementations of the second aspect.

According to a seventh aspect, this application provides a computer-readable storage medium, including a computer program. When the computer program is executed on a computer, the computer is enabled to perform the method according to any one of the possible implementations of the first aspect and the second aspect.

According to an eighth aspect, this application provides a computer program product. The computer program product includes instructions. When the instructions are run on a computer or a processor, the computer or the processor is enabled to implement the method according to any one of the possible implementations of the first aspect and the second aspect.

## BRIEF DESCRIPTION OF DRAWINGS

FIG. 1A is an example block diagram of a coding system 10 according to this application;

FIG. 1B is an example block diagram of a video coding system 40 according to this application;

FIG. 2 is an example block diagram of a video encoder 20 according to this application;

FIG. 3 is an example diagram of a structure of a video decoder 30 according to this application;

FIG. 4 is a diagram of a video coding device 400 according to this application;

FIG. 5 is a simplified block diagram of an apparatus 500 according to this application;

FIG. 6 is a diagram of PU splitting according to this application;

FIG. 7 is an example block diagram of a coding system 70 according to this application;

FIG. 8 is a flowchart of a process 800 of a word-including picture encoding method according to an embodiment of this application;

FIG. 9 is a flowchart of a process 900 of a word-including picture decoding method according to an embodiment of this application;

FIG. 10 is an example block diagram of a coding system 100 according to this application;

FIG. 11a is a diagram of word area detection and partitioning;

FIG. 11b is a diagram of adaptive word alignment;

FIG. 11c is a diagram of word restoration;

FIG. 12a is a diagram of word area detection and partitioning;

FIG. 12b is a diagram of adaptive word alignment;

FIG. 13 is an example diagram of a structure of an encoding apparatus 1300 according to an embodiment of this application; and

FIG. 14 is an example diagram of a structure of a decoding apparatus 1400 according to an embodiment of this application.

## DESCRIPTION OF EMBODIMENTS

To make objectives, technical solutions, and advantages of this application clearer, the following clearly and completely describes the technical solutions in this application with reference to accompanying drawings in this application. It is clear that the described embodiments are merely a part rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, terms such as "first" and "second" are merely intended for distinguishing and description, and shall not be understood as indicating or implying relative importance, or indicating or implying a sequence. In addition, terms "include", "have", and any variant thereof are intended to cover non-exclusive inclusion, for example, include a series of steps or units. A method, system, product, or device is not necessarily limited to those steps or units expressly listed, but may include another step or unit not expressly listed or inherent to such a process, method, product, or device.

It should be understood that, in this application, "at least one" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural.

Video coding typically refers to processing of a sequence of pictures, where the sequence of pictures forms a video or a video sequence. In the field of video coding, terms "picture (picture)", "frame (frame)", and "image (image)" may be used as synonyms. Video coding (or coding in general) includes two parts: video encoding and video decoding. Video encoding is performed on a source side, and typically includes processing (for example, by compression) an original video picture to reduce an amount of data required for representing the video picture (for more efficient storage and/or transmission). Video decoding is performed on a destination side, and typically includes inverse processing in comparison with processing of an encoder to reconstruct the video picture. "Coding" of a video picture (or a picture in general) in embodiments should be understood to as "encoding" or "decoding" of a video picture or a video sequence. A combination of an encoding part and a decoding part is also referred to as encoding and decoding (encoding and decoding, CODEC).

In a case of lossless video coding, an original video picture can be reconstructed. In other words, a reconstructed video picture has same quality as the original video picture (assuming that no transmission loss or other data loss occurs during storage or transmission). In a case of lossy video coding, further compression is performed through quantization and the like, to reduce an amount of data required for representing a video picture, and the video picture cannot be completely reconstructed on a decoder side. In other words, quality of a reconstructed video picture is lower or poorer than that of the original video picture.

Several video coding standards are used for "lossy hybrid video encoding and decoding" (that is, spatial prediction and temporal prediction in pixel domain are combined with 2D transform coding for applying quantization in a transform domain). Each picture of a video sequence is typically partitioned into a set of non-overlapping blocks, and coding is typically performed at a block level. To be specific, at an encoder, a video is usually processed, that is, encoded, at a block (video block) level. For example, a predicted block is generated through spatial (intra) prediction and temporal (inter) prediction, the predicted block is subtracted from a current block (block being processed or to be processed) to obtain a residual block, and the residual block is transformed in the transform domain and quantized to reduce an amount of data that is to be transmitted (compressed). At a decoder side, an inverse processing part relative to the encoder is applied to an encoded block or a compressed block to reconstruct the current block for representation. Furthermore, the encoder needs to duplicate processing steps of the decoder such that the encoder and the decoder generate same predictions (for example, intra prediction and inter prediction) and/or reconstruct pixels for processing, namely, encoding a subsequent block.

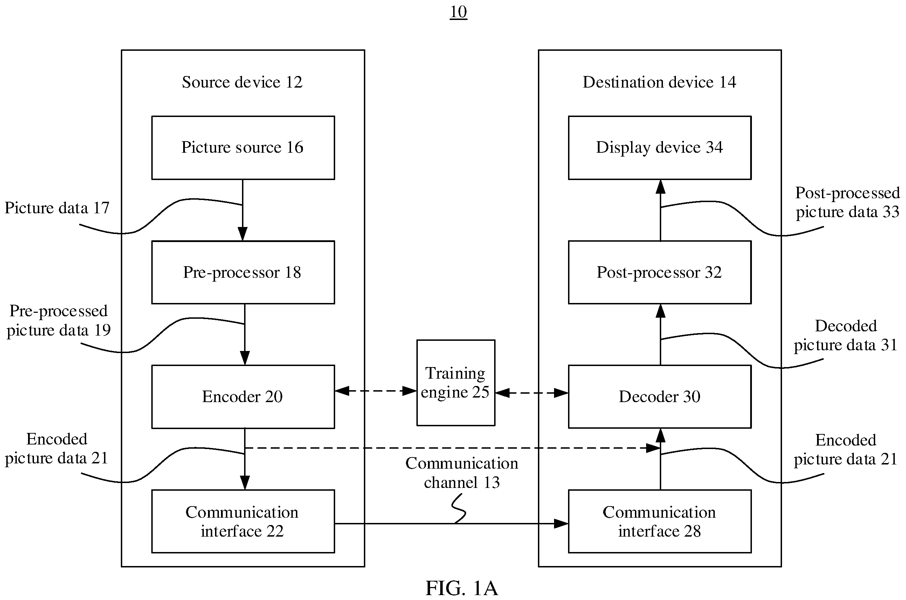

In the following embodiment of a coding system 10, an encoder 20 and a decoder 30 are described based on FIG. 1A to FIG. 3.

FIG. 1A is an example block diagram of the coding system 10 according to this application, for example, a video coding system 10 (or the coding system 10 for short) that can use a technology in this application. A video encoder 20 (or the encoder 20 for short) and a video decoder 30 (or the decoder 30 for short) of the video coding system 10 represent devices that may be configured to perform techniques in accordance with various examples described in this application.

As shown in FIG. 1A, the coding system 10 includes a source device 12. The source device 12 is configured to provide encoded picture data 21, for example, an encoded picture for a destination device 14 for decoding the encoded picture data 21.

The source device 12 includes the encoder 20, and may additionally, that is, optionally, include a picture source 16, a pre-processor (or pre-processing unit) 18, for example, a picture pre-processor, and a communication interface (or communication unit) 22.

The picture source 16 may include or be any kind of picture capturing device, for example a camera for capturing a real-world picture, and/or any type of a picture generating device, for example a computer-graphics processing unit for generating a computer animated picture, or any type of other device for obtaining and/or providing a real-world picture, a computer generated picture (for example, a screen content, a virtual reality (virtual reality, VR) picture) and/or any combination thereof (for example, an augmented reality (augmented reality, AR) picture). The picture source may be any type of memory or storage storing any of the foregoing pictures.

For distinguishment of processing performed by the pre-processor (or the pre-processing unit) 18, a picture (or picture data) 17 may also be referred to as an original picture (or original picture data) 17.

The pre-processor 18 is configured to: receive the (original) picture data 17 and perform pre-processing on the picture data 17, to obtain a pre-processed picture (or pre-processed picture data) 19. Pre-processing performed by the pre-processor 18 may, for example, include trimming, color format conversion (for example, conversion from RGB to YCbCr), color correction, or de-noising. It may be understood that the pre-processing unit 18 may be optional component.

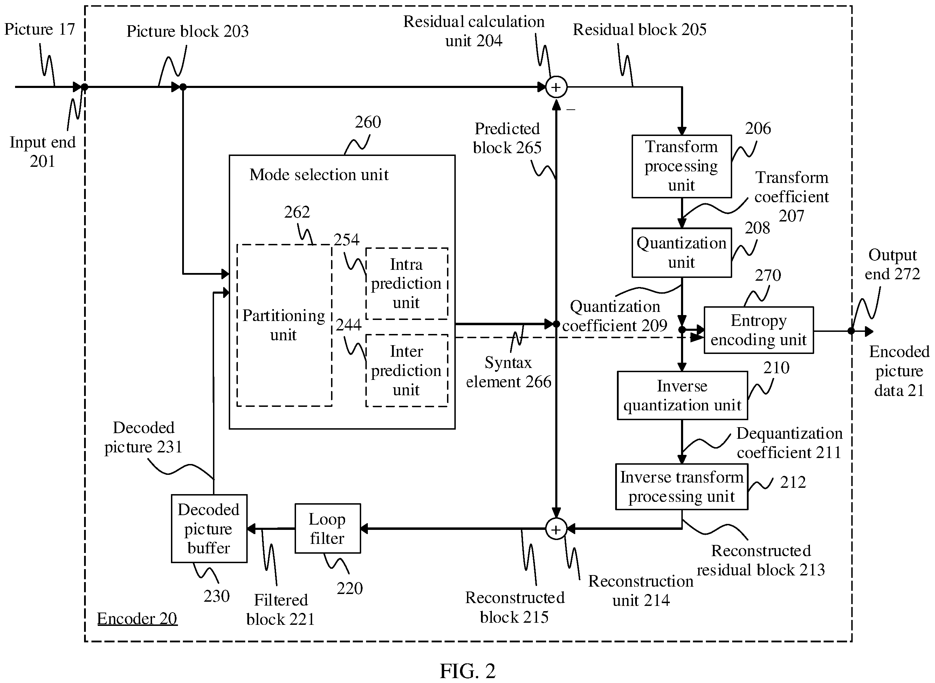

The video encoder (or encoder) 20 is configured to: receive the pre-processed picture data 19 and provide the encoded picture data 21 (further descriptions are described below based on FIG. 2 and the like).

The communication interface 22 of the source device 12 may be configured to: receive the encoded picture data 21 and transmit the encoded picture data 21 (or any further processed version thereof) over a communication channel 13 to another device, for example, the destination device 14 or any other device, for storage or direct reconstruction.

The destination device 14 includes the decoder 30, and may additionally, that is, optionally, include a communication interface (or communication unit) 28, a post-processor (or post-processing unit) 32, and a display device 34.

The communication interface 28 of the destination device 14 is configured to: receive the encoded picture data 21 (or any further processed version thereof) directly from the source device 12 or from any other source device like a storage device, for example, an encoded picture data storage device, and provide the encoded picture data 21 to the decoder 30.

The communication interface 22 and the communication interface 28 may be configured to transmit or receive the encoded picture data (or encoded data) 21 via a direct communication link between the source device 12 and the destination device 14, for example, a direct wired or wireless connection, or via any kind of network, for example, a wired or wireless network or any combination thereof, or any kind of private and public network, or any kind of combination thereof.

The communication interface 22 may be, for example, configured to package the encoded picture data 21 into an appropriate format, for example, a packet, and/or process the encoded picture data using any kind of transmission encoding or processing for transmission over a communication link or communication network.

The communication interface 28, forming the counterpart of the communication interface 22, may be, for example, configured to receive the transmitted data and process the transmitted data using any kind of corresponding transmission decoding or processing and/or de-packaging to obtain the encoded picture data 21.

Both the communication interface 22 and the communication interface 28 may be configured as unidirectional communication interfaces as indicated by the arrow for the communication channel 13 in FIG. 1A pointing from the source device 12 to the destination device 14, or bi-directional communication interfaces, and may be configured, for example, to send and receive messages, for example, to set up a connection, to acknowledge and exchange any other information related to the communication link and/or data transmission, for example, encoded picture data transmission.

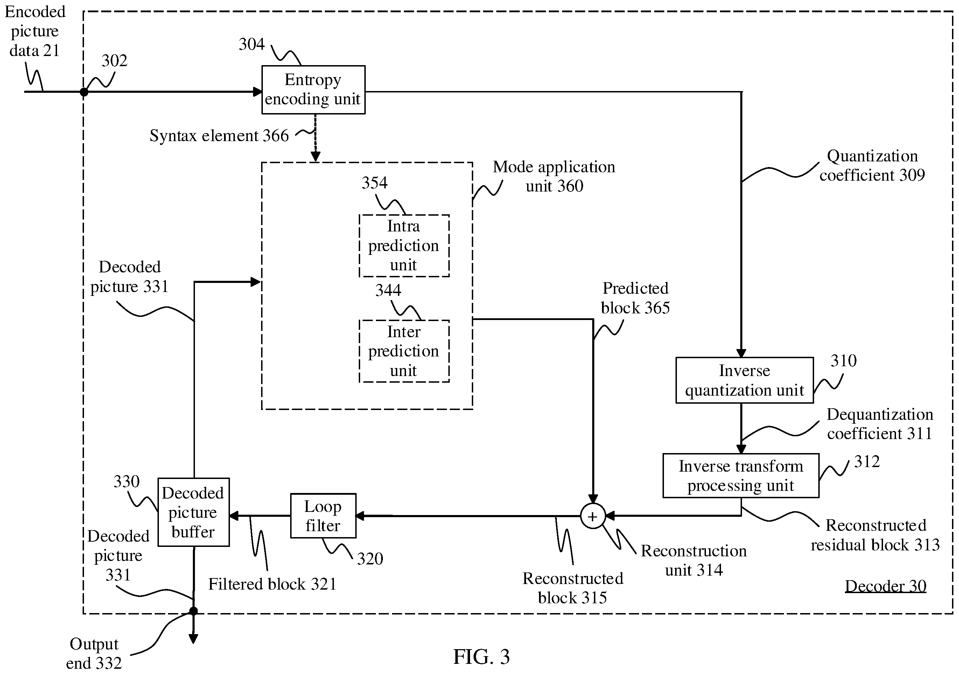

The video decoder (or decoder) 30 is configured to: receive the encoded picture data 21 and provide decoded picture (or decoded picture data) 31 (further descriptions will be described below based on FIG. 3 and the like).

The post-processor 32 is configured to post-process the decoded picture data 31 (also referred to as reconstructed picture data), for example, the decoded picture, to obtain post-processed picture data 33, for example, a post-processed picture. The post-processing performed by the post-processing unit 32 may include, for example, color format conversion (for example, conversion from YCbCr to RGB), color correction, trimming, or re-sampling, or any other processing, for example, for preparing the decoded picture data 31 for display, for example, by the display device 34.

The display device 34 is configured to receive the post-processed picture data 33 for displaying the picture, for example, to a user or viewer. The display device 34 may be or include any type of display for representing the reconstructed picture, for example, an integrated or external display or monitor. For example, the display may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS) display, a digital light processor (digital light processor, DLP), or any type of other display.

The coding system 10 further includes a training engine 25. The training engine 25 is configured to train one or more modules of the encoder 20 or the decoder 30 or the encoder 20 or the decoder 30.

In this embodiment of this application, training data may be stored in a database (not shown), and the training engine 25 performs training based on the training data to obtain a target model. It should be noted that a source of the training data is not limited in embodiments of this application. For example, the training data may be obtained from a cloud or another place to perform model training.

The target model obtained through training by the training engine 25 may be applied to the coding system 10, for example, applied to the source device 12 (for example, the encoder 20) or the destination device 14 (for example, the decoder 30) shown in FIG. 1A. The training engine 25 may obtain the target model through training on the cloud, and then the coding system 10 downloads the target model from the cloud and uses the target model. Alternatively, the training engine 25 may obtain the target model through training on the cloud and use the target model, and the coding system 10 directly obtains a processing result from the cloud. This is not specifically limited.

Although FIG. 1A shows that the source device 12 and the destination device 14 are independent devices. However, the device embodiment may also include both the source device 12 and the destination device 14 or include functions of both the source device 12 and the destination device 14, that is, include both the source device 12 or a corresponding function and the destination device 14 or a corresponding function. In these embodiments, the source device 12 or the corresponding function and the destination device 14 or the corresponding function may be implemented by using same hardware and/or software or by using separate hardware and/or software or any combination thereof.

As will be apparent for a skilled person based on the description, existence and division into different units or functions in the source device 12 and/or the destination device 14 shown in FIG. 1A may vary depending on an actual device and application.

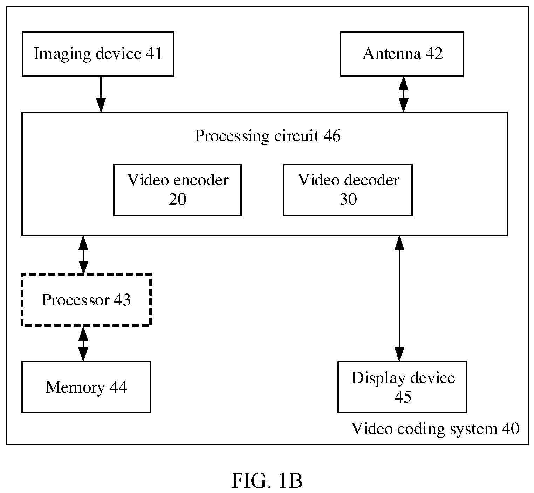

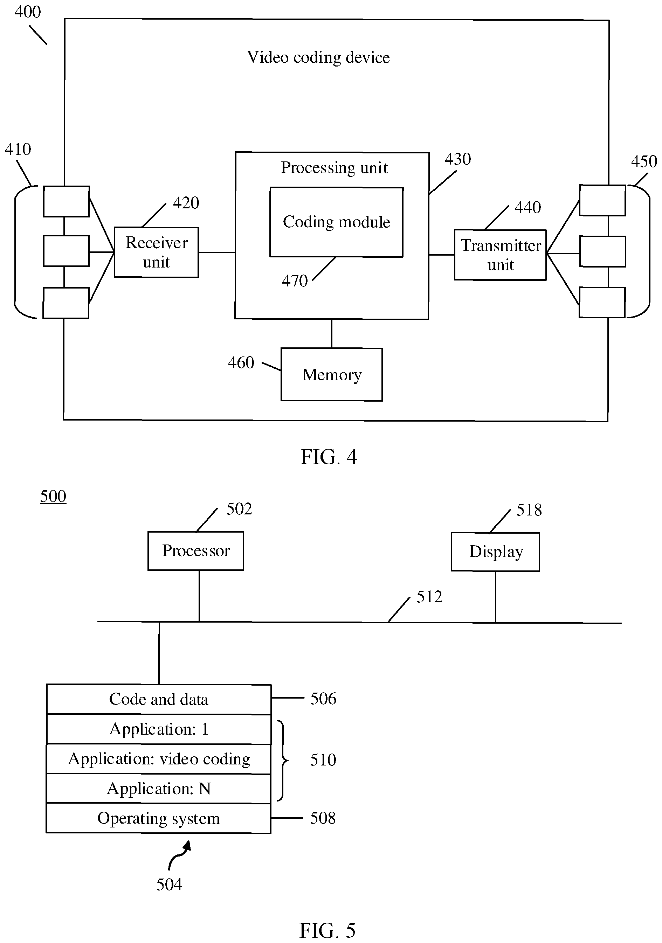

The encoder 20 (for example, the video encoder 20) or the decoder 30 (for example, the video decoder 30) or both the encoder 20 and the decoder 30 may be implemented by a processing circuit as shown in FIG. 1B, for example, one or more microprocessors, digital signal processors (digital signal processors, DSPs), application-specific integrated circuits (application-specific integrated circuits, ASICs), field-programmable gate arrays (field-programmable gate arrays, FPGAs), discrete logic, hardware, dedicated processors for video coding, or any combination thereof. The encoder 20 may be implemented via a processing circuit 46 to embody various modules as discussed with respect to the encoder 20 in FIG. 2 and/or any other encoder system or subsystem described in this specification. The decoder 30 may be implemented via the processing circuit 46 to embody various modules as discussed with respect to the decoder 30 in FIG. 3 and/or any other decoder system or subsystem described in this specification. The processing circuit 46 may be configured to perform various operations discussed below. As shown in FIG. 5, if the techniques are implemented partially in software, a device may store instructions for the software in a suitable non-transitory computer-readable storage medium and may execute the instructions in hardware using one or more processors to perform the techniques of this application. Either of the video encoder 20 and the video decoder 30 may be integrated as part of a combined encoder/decoder (encoder/decoder, CODEC) in a single device, for example, as shown in FIG. 1B.

The source device 12 and the destination device 14 may include any of a wide range of devices, including any type of handheld or stationary devices, for example, notebook or laptop computers, mobile phones, smart phones, tablets or tablet computers, cameras, desktop computers, set-top boxes, televisions, display devices, digital media players, video gaming consoles, video streaming devices (such as content services servers or content delivery servers), broadcast receiver devices, broadcast transmitter devices, or the like, and may use no or any type of operating system. In some cases, the source device 12 and the destination device 14 may be equipped with components for wireless communication. Therefore, the source device 12 and the destination device 14 may be wireless communication devices.

In some cases, the video coding system 10 shown in FIG. 1A is merely an example. The techniques of this application may apply to video coding settings (for example, video encoding or video decoding) that do not necessarily include any data communication between an encoding device and a decoding device. In other examples, data is retrieved from a local memory, sent over a network, or the like. A video encoding device may encode data and store encoded data into a memory, and/or a video decoding device may retrieve the data from the memory and decode the data. In some examples, encoding and decoding are performed by devices that do not communicate with each other, but simply encode data into a memory and/or retrieve data from the memory and decode the data.

FIG. 1B is an example block diagram of a video coding system 40 according to this application. The video coding system 40 may include an imaging device 41, the video encoder 20, the video decoder 30 (and/or a video encoder/decoder implemented by the processing circuit 46), an antenna 42, one or more processors 43, one or more memories 44, and/or a display device 45.

As shown in FIG. 1B, the imaging device 41, the antenna 42, the processing circuit 46, the video encoder 20, the video decoder 30, the processor 43, the memory 44, and/or the display device 45 can communicate with each other. The video coding system 40 may include only the video encoder 20 or only the video decoder 30 in different examples.

In some examples, the antenna 42 may be configured to transmit or receive an encoded bitstream of video data. Further, in some examples, the display device 45 may be configured to present video data. The processing circuit 46 may include application-specific integrated circuit (application-specific integrated circuit, ASIC) logic, a graphics processing unit, a general-purpose processor, or the like. The video coding system 40 may also include the optional processor 43. The optional processor 43 may similarly include application-specific integrated circuit (application-specific integrated circuit, ASIC) logic, a graphics processing unit, a general-purpose processor, or the like. In addition, the memory 44 may be a memory of any type, for example, a volatile memory (for example, a static random access memory (static random access memory, SRAM) or a dynamic random access memory (dynamic random access memory, DRAM)) or a non-volatile memory (for example, a flash memory). In a non-limitative example, the memory 44 may be implemented by a cache memory. In other examples, the processing circuit 46 may include a memory (for example, a cache) for implementing a picture buffer.

In some examples, the video encoder 20 implemented by using a logic circuit may include a picture buffer (which is implemented by, for example, the processing circuit 46 or the memory 44) and a graphics processing unit (which is implemented by, for example, the processing circuit 46). The graphics processing unit may be communicatively coupled to the picture buffer. The graphics processing unit may be included in the video encoder 20 implemented by the processing circuit 46, to embody various modules discussed with reference to FIG. 2 and/or any other encoder system or subsystem described in this specification. The logic circuit may be configured to perform various operations discussed in this specification.

In some examples, the video decoder 30 may be implemented by the processing circuit 46 in a similar manner, to implement various modules discussed with reference to the video decoder 30 in FIG. 3 and/or any other decoder system or subsystem described in this specification. In some examples, the video decoder 30 implemented by using a logic circuit may include a picture buffer (which is implemented by the processing circuit 46 or the memory 44) and a graphics processing unit (which is implemented by, for example, the processing circuit 46). The graphics processing unit may be communicatively coupled to the picture buffer. The graphics processing unit may be included in the video decoder 30 implemented by the processing circuit 46, to embody various modules discussed with reference to FIG. 3 and/or any other decoder system or subsystem described in this specification.

In some examples, the antenna 42 may be configured to receive an encoded bitstream of video data. As discussed, the encoded bitstream may include data, an indicator, an index value, mode selection data, or the like related to video frame encoding described in this specification, for example, data related to encoding partitioning (for example, a transform coefficient or a quantization transform coefficient, an optional indicator (as discussed), and/or data defining the encoding partitioning). The video coding system 40 may further include the video decoder 30 that is coupled to the antenna 42 and that is configured to decode the encoded bitstream. The display device 45 is configured to present a video frame.

It should be understood that, in this embodiment of this application, for the example described with reference to the video encoder 20, the video decoder 30 may be configured to perform a reverse process. With regard to a signaling syntax element, the video decoder 30 may be configured to receive and parse such a syntax element and correspondingly decode related video data. In some examples, the video encoder 20 may perform entropy encoding on the syntax element to obtain an encoded video bitstream. In such examples, the video decoder 30 may parse such syntax element and correspondingly decode the related video data.

For ease of description, embodiments of this application are described with reference to versatile video coding (Versatile video coding, VVC) reference software or high-efficiency video coding (High-Efficiency Video Coding, HEVC) developed by the joint collaboration team on video coding (Joint Collaboration Team on Video Coding, JCT-VC) constituted by the ITU-T video coding experts group (Video Coding Experts Group, VCEG) and the ISO/IEC motion picture experts group (Motion Picture Experts Group, MPEG). A person of ordinary skill in the art understands that embodiments of this application are not limited to the HEVC or the VVC.

Encoder and encoding method

FIG. 2 is an example block diagram of the video encoder 20 according to this application. In the example in FIG. 2, the video encoder 20 includes an input end (or input interface) 201, a residual calculation unit 204, a transform processing unit 206, a quantization unit 208, an inverse quantization unit 210, an inverse transform processing unit 212, a reconstruction unit 214, a loop filter 220, a decoded picture buffer (decoded picture buffer, DPB) 230, a mode selection unit 260, an entropy encoding unit 270, and an output end (or output interface) 272. The mode selection unit 260 may include an inter prediction unit 244, an intra prediction unit 254, and a partitioning unit 262. The inter prediction unit 244 may include a motion estimation unit and a motion compensation unit (which are not shown). The video encoder 20 shown in FIG. 2 may also be referred to as a hybrid video encoder or a video encoder based on a hybrid video codec.

The residual calculation unit 204, the transform processing unit 206, the quantization unit 208, and the mode selection unit 260 are referred to as forming a forward signal path of the encoder 20, whereas the inverse quantization unit 210, the inverse transform processing unit 212, the reconstruction unit 214, the loop filter 220, the decoded picture buffer (decoded picture buffer, DPB) 230, the inter prediction unit 244, and the intra prediction unit 254 are referred to as forming a backward signal path of the encoder, where the backward signal path of the encoder 20 corresponds to a signal path of the decoder (refer to the decoder 30 in FIG. 3). The inverse quantization unit 210, the inverse transform processing unit 212, the reconstruction unit 214, the loop filter 220, the decoded picture buffer 230, the inter prediction unit 244, and the intra prediction unit 254 are further referred to as forming a "built-in decoder" of the video encoder 20.

Picture and picture partitioning (picture and block)

The encoder 20 may be configured to receive, for example, via the input end 201, a picture (or picture data) 17, for example, a picture in a sequence of pictures forming a video or video sequence. The received picture or picture data may also be a pre-processed picture (or pre-processed picture data) 19. For ease of simplicity, the picture 17 is used in the following descriptions. The picture 17 may also be referred to as a current picture or to-be-encoded picture (in particular in video coding to distinguish the current picture from other pictures, for example, previously encoded and/or decoded pictures of a same video sequence, namely, a video sequence that also includes the current picture).

A (digital) picture is or may be considered as a two-dimensional array or matrix including samples with intensity values. A sample in the array may also be referred to as a pixel (pixel or pel) (short for a picture element). Quantity of pixels of the array or the picture in horizontal and vertical directions (or axes) determine a size and/or resolution of the picture. For representation of color, three color components are usually employed, to be specific, the picture may be represented as or include three sample arrays. In an RBG format or color space, a picture includes a corresponding red, green and blue sample array. However, in video coding, each pixel is usually represented in a luminance/chrominance format or color space, for example, YCbCr, which includes a luminance component indicated by Y (sometimes indicated by L) and two chrominance components indicated by Cb and Cr. The luminance (luma) component Y indicates luminance or gray level intensity (for example, both are the same in a gray-scale picture), while the two chrominance (chrominance, chroma for short) components Cb and Cr indicate chrominance or color information components. Accordingly, a picture in YCbCr format includes a luminance sample array of luminance sample values (Y), and two chrominance sample arrays of chrominance values (Cb and Cr). A picture in RGB format may be converted or transformed into a picture in YCbCr format and vice versa. The process is also referred to as color transform or conversion. If a picture is monochrome, the picture may include only a luminance sample array. Accordingly, a picture may be, for example, a luminance sample array in monochrome format or a luminance sample array and two corresponding chrominance sample arrays in 4:2:0, 4:2:2, and 4:4:4 color format.

In an embodiment, the embodiment of the video encoder 20 may include a partitioning unit 262, configured to partition the picture 17 into a plurality of (typically non-overlapping) picture blocks 203 (which may also be referred to as blocks 203 or CTUs 203 for short). These blocks may also be referred to as root blocks, macro blocks (H.264/AVC), coding tree blocks (Coding Tree Blocks, CTBs), or coding tree units (Coding Tree Units, CTUs) in the H.265/HEVC and VVC standards. The partitioning unit 262 may be configured to use a same block size for all pictures of a video sequence and a corresponding grid defining the block size, or to change a block size between pictures or picture subsets or groups of pictures, and partition each picture into corresponding blocks.

In other embodiments, the video encoder may be configured to directly receive the block 203 of the picture 17, for example, one, several or all blocks forming the picture 17. The picture block 203 may also be referred to as a current picture block or a to-be-encoded picture block.

Like the picture 17, the picture block 203 is also or may be considered as a two-dimensional array or matrix including samples with intensity values (sample values), although of a smaller dimension than the picture 17. In other words, the block 203 may include one sample array (for example, a luminance array in case of a monochrome picture 17, or a luminance or chrominance array in case of a color picture) or three sample arrays (for example, one luminance array and two chrominance arrays in case of a color picture 17) or any other quantity and/or type of arrays depending on a color format applied. Quantities of samples of the block 203 in the horizontal and vertical directions (or axes) define the size of the block 203. Accordingly, a block may be an array of M×N (M columns×N rows) samples, an array of M×N transform coefficients, or the like.

In an embodiment, the video encoder 20 shown in FIG. 2 may be configured to encode the picture 17 block by block, for example, encode and predict each block 203.

In an embodiment, the video encoder 20 shown in FIG. 2 may be further configured to partition and/or encode the picture by using slices (also referred to as video slices), where the picture may be partitioned or encoded using one or more slices (typically non-overlapping). Each slice may include one or more blocks (for example, coding tree units CTUs) or one or more groups of blocks (for example, tiles (tiles) in the H.265/HEVC/VVC standard and bricks (bricks) in the VVC standard).

In an embodiment, the video encoder 20 shown in FIG. 2 may be further configured to partition and/or encode the picture by using slices/tile groups (also referred to as video tile groups) and/or tiles (also referred to as video tiles). The picture may be partitioned or encoded using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

Residual calculation

The residual calculation unit 204 is configured to calculate a residual block 205 based on the picture block 203 and a predicted block 265 (further details about the predicted block 265 are provided later), for example, by subtracting sample values of the predicted block 265 from sample values of the picture block 203, sample by sample (pixel by pixel) to obtain the residual block 205 in pixel domain.

Transform

The transform processing unit 206 is configured to apply a transform, for example, a discrete cosine transform (discrete cosine transform, DCT) or discrete sine transform (discrete sine transform, DST), on the sample values of the residual block 205 to obtain transform coefficients 207 in transform domain. The transform coefficients 207 may also be referred to as transform residual coefficients and represent the residual block 205 in transform domain.

The transform processing unit 206 may be configured to apply integer approximations of DCT/DST, such as transforms specified in the H.265/HEVC. Compared with an orthogonal DCT transform, such integer approximations are usually scaled based on a factor. To preserve a norm of a residual block which is processed by using forward and inverse transforms, an additional scale factor is applied as a part of the transform process. The scale factor is usually selected based on some constraints, for example, the scale factor being a power of two for a shift operation, a bit depth of the transform coefficient, and a tradeoff between accuracy and implementation costs. For example, a specific scale factor is specified for the inverse transform by the inverse transform processing unit 212 at the encoder 20 side (and a corresponding inverse transform by, for example, an inverse transform processing unit 312 at the decoder 30 side), and correspondingly, a corresponding scale factor may be specified for the forward transform by the transform processing unit 206 at the encoder 20 side.

In an embodiment, the video encoder 20 (correspondingly, the transform processing unit 206) may be configured to output a transform parameter like one or more transform types, for example, directly output the transform parameter or output the transform parameter after the transform parameter is encoded or compressed by the entropy encoding unit 270, so that, for example, the video decoder 30 may receive and use the transform parameter for decoding.

Quantization

The quantization unit 208 is configured to quantize the transform coefficients 207 to obtain quantization transform coefficients 209, for example, by applying scalar quantization or vector quantization. The quantization transform coefficients 209 may also be referred to as quantization residual coefficients 209.

The quantization process may reduce a bit depth related to some or all of the transform coefficients 207. For example, an n-bit transform coefficient may be rounded down to an m-bit transform coefficient during quantization, where n is greater than m. A quantization degree may be modified by adjusting a quantization parameter (quantization parameter, QP). For example, for the scalar quantization, different scales may be used to implement finer or coarser quantization. A smaller quantization step corresponds to finer quantization, and a larger quantization step corresponds to coarser quantization. An appropriate quantization step may be indicated by a quantization parameter (quantization parameter, QP). For example, the quantization parameter may be an index to a predefined set of appropriate quantization steps. For example, a smaller quantization parameter may correspond to finer quantization (a smaller quantization step) and a larger quantization parameter may correspond to coarser quantization (a larger quantization step), or vice versa. The quantization may include division by a quantization step and a corresponding and/or inverse dequantization, for example, by the inverse quantization unit 210, may include multiplication by the quantization step. In embodiments according to some standards such as HEVC, a quantization parameter may be used to determine the quantization step size. Generally, the quantization step may be calculated based on a quantization parameter and through a fixed point approximation of an equation including division. Additional scale factors may be introduced for quantization and dequantization to restore the norm of the residual block, where the norm of the residual block may be modified because of a scale used in the fixed point approximation of the equation for the quantization step and the quantization parameter. In an example implementation, a scale of the inverse transform may be combined with a scale of the dequantization. Alternatively, customized quantization tables may be used and signaled from the encoder to the decoder, for example, in a bitstream. The quantization is a lossy operation, where a larger quantization step indicates a larger loss.

In an embodiment, the video encoder 20 (correspondingly, the quantization unit 208) may be configured to output a quantization parameter (quantization parameter, QP), for example, directly output the quantization parameter or output the quantization parameter after the quantization parameter is encoded or compressed by the entropy encoding unit 270, so that, for example, the video decoder 30 may receive and use the quantization parameter for decoding.

Inverse quantization

The inverse quantization unit 210 is configured to apply the inverse quantization of the quantization unit 208 on the quantization coefficients to obtain dequantization coefficients 211, for example, by applying an inverse scheme of the quantization scheme applied by the quantization unit 208 based on or using the same quantization step as the quantization unit 208. The dequantization coefficients 211 may also be referred to as dequantization residual coefficients 211 and correspond to the transform coefficients 207. However, the dequantization coefficients 211 are typically not identical to the transform coefficients due to the loss by quantization.

Inverse transform

The inverse transform processing unit 212 is configured to apply the inverse transform of the transform applied by the transform processing unit 206, for example, an inverse discrete cosine transform (discrete cosine transform, DCT) or inverse discrete sine transform (discrete sine transform, DST), to obtain a reconstructed residual block 213 (or corresponding dequantization coefficients 211) in the sample domain. The reconstructed residual block 213 may also be referred to as a transform block 213.

Reconstruction

The reconstruction unit 214 (for example, an adder 214) is configured to add the transform block 213 (namely, the reconstructed residual block 213) to the predicted block 265 to obtain a reconstructed block 215 in the pixel domain, for example, by adding the sample values of the reconstructed residual block 213 and the sample values of the predicted block 265.

Filtering

A loop filter unit 220 (also referred to as the "loop filter" 220 for short) is configured to filter the reconstructed block 215 to obtain a filtered block 221, or usually configured to filter a reconstructed sample to obtain a filtered sample value. For example, the loop filter unit is configured to perform smooth pixel conversion or improve video quality. The loop filter unit 220 may include one or more loop filters such as a de-blocking filter, a sample-adaptive offset (sample-adaptive offset, SAO) filter, or one or more other filters, for example, an adaptive loop filter (adaptive loop filter, ALF), a noise suppression filter (noise suppression filter, NSF), or any combination thereof. For example, the loop filter unit 220 may include a de-blocking filter, a SAO filter, and an ALF filter. An order of a filtering process may be the de-blocking filter, the SAO filter, and the ALF filter. For another example, a process called luma mapping with chroma scaling (luma mapping with chroma scaling, LMCS) (namely, an adaptive in-loop reshaper) is added. This process is performed before de-blocking. For another example, a de-blocking filter process may be also applied to internal sub-block edges, for example, affine sub-blocks edges, ATMVP sub-blocks edges, sub-block transform (sub-block transform, SBT) edges, and intra sub-partition (intra sub-partition, ISP) edges. Although the loop filter unit 220 is shown in FIG. 2 as being a loop filter, in other configurations, the loop filter unit 220 may be implemented as a post loop filter. The filtered block 221 may also be referred to as a filtered reconstructed block 221.

In an embodiment, the video encoder 20 (correspondingly, the loop filter unit 220) may be configured to output loop filter parameters (such as a SAO filter parameter, an ALF filter parameter, or an LMCS parameter), for example, directly output the loop filter parameters or output the loop filter parameters after entropy encoding is performed on the loop filter parameters by the entropy encoding unit 270, so that, for example, the decoder 30 may receive and use a same loop filter parameter or different loop filter parameters for decoding.

Decoded picture buffer

The decoded picture buffer (decoded picture buffer, DPB) 230 may be a reference picture memory that stores reference picture data for use by the video encoder 20 during video data encoding. The DPB 230 may be formed by any of a variety of memory devices, such as a dynamic random access memory (dynamic random access memory, DRAM), including a synchronous DRAM (synchronous DRAM, SDRAM), a magnetoresistive RAM (magnetoresistive RAM, MRAM), a resistive RAM (resistive RAM, RRAM), or another type of memory device. The decoded picture buffer 230 may be configured to store one or more filtered blocks 221. The decoded picture buffer 230 may be further configured to store other previously filtered blocks, for example, previously reconstructed and filtered blocks 221, of a same current picture or of different pictures such as previously reconstructed pictures, and may provide complete previously reconstructed, namely, decoded pictures (and corresponding reference blocks and samples) and/or a partially reconstructed current picture (and a corresponding reference block and sample), for example for inter prediction. The decoded picture buffer 230 may be further configured to store one or more unfiltered reconstructed blocks 215, or generally store unfiltered reconstructed samples, for example, the reconstructed block 215 that is not filtered by the loop filter unit 220, or a reconstructed block or a reconstructed sample on which no any other processing is performed.

Mode selection (partitioning and prediction)

The mode selection unit 260 includes the partitioning unit 262, the inter prediction unit 244, and the intra prediction unit 254, and is configured to receive or obtain original picture data, for example, the original block 203 (the current block 203 of the current picture 17), and reconstructed picture data, for example, filtered and/or unfiltered reconstructed samples or blocks of the same (current) picture and/or from one or more previously decoded pictures, for example, from the decoded picture buffer 230 or other buffers (for example, a column buffer, not shown in the figure). The reconstructed picture data is used as reference picture data for prediction, for example, inter prediction or intra prediction, to obtain the predicted block 265 or a predicted value 265.

The mode selection unit 260 may be configured to determine or select a partitioning for a current block prediction mode (including non-partitioning) and a prediction mode (for example, an intra or inter prediction mode) and generate a corresponding predicted block 265, which is used for calculation of the residual block 205 and for the reconstruction of the reconstructed block 215.

In an embodiment, the mode selection unit 260 may be configured to select the partitioning and the prediction mode (for example, from those supported by or available for the mode selection unit 260), which provides best matching or a minimum residual (the minimum residual refers to better compression for transmission or storage), or minimum signaling overheads (the minimum signaling overheads refer to better compression for transmission or storage), or a minimum residual and minimum signaling overheads are considered or balanced in the prediction mode. The mode selection unit 260 may be configured to determine the partitioning and prediction mode based on rate distortion optimization (rate distortion Optimization, RDO), that is, select the prediction mode that provides a minimum rate distortion optimization. The terms "best", "lowest", "optimal" and the like in this specification do not necessarily mean "best", "lowest", "optimal" in general, but may also refer to situations in which termination or selection criteria are met. For example, values that exceed or fall below a threshold or other restrictions may result in "suboptimal selections" but reduce complexity and processing time.

In other words, the partitioning unit 262 may be configured to partition a picture of a video sequence into a sequence of picture blocks (also referred to as coding tree units (coding tree units, CTUs)), and the CTU 203 may be further partitioned into smaller block partitions or sub-blocks (which form the blocks again), for example, iteratively using quad-tree partitioning (quad-tree partitioning, QT), binary-tree partitioning (binary-tree partitioning, BT) or triple-tree partitioning (triple-tree partitioning, TT) or any combination thereof, and to perform, for example, prediction for each of the block partitions or sub-blocks, where mode selection includes selection of a tree structure of the partitioned block 203 and prediction modes applied to each of the block partitions or sub-blocks.

The following describes in detail partitioning (for example, by the partitioning unit 262) and prediction (for example, by the inter prediction unit 244 and the intra prediction unit 254) that are performed by the video encoder 20.

Partitioning

The partitioning unit 262 may partition (or split) a coding tree unit 203 into smaller partitions, for example, square or rectangular small blocks. For a picture that has three sample arrays, a CTU includes a block of $N \times N$ luminance samples together with two corresponding blocks of chrominance samples. A maximum allowed size of the luminance block in a CTU is specified to be $128 \times 128$ in the developing versatile video coding (Versatile Video Coding, VVC), but it can be specified to be value rather than $128 \times 128$ in the future, for example, $256 \times 256$. The CTUs of a picture may be clustered/grouped as slices/tile groups, tiles or bricks. A tile covers a rectangular area of a picture, and a tile may be divided into one or more bricks. A brick includes a plurality of CTU rows in a tile. A tile that is not partitioned into a plurality of bricks may be referred to as a brick. However, a brick is a true subset of a tile and therefore is not referred to as a tile. Two modes of tile groups are supported in the VVC: a raster-scan slice/tile group mode and a rectangular slice mode. In the raster-scan tile group mode, a slice/tile group includes a sequence of tiles in tile raster scan of a picture. In the rectangular slice mode, a slice includes a plurality of bricks of a picture that collectively form a rectangular area of the picture. The bricks within a rectangular slice are in an order of brick raster scan of the slice. These small blocks (which may also be referred to as sub-blocks) may be further partitioned into even smaller partitions. This is also referred to tree partitioning or hierarchical tree partitioning, where a root block, for example, at a root tree level 0 (hierarchy level 0, depth 0) may be recursively partitioned into two or more blocks at a next lower tree level, for example, nodes at a tree level 1 (hierarchy level 1, depth 1). These blocks may be further partitioned into two or more blocks at a next lower level, for example, a tree level 2 (hierarchy level 2, depth 2), until partitioning is terminated (because a termination criterion is fulfilled, for example, a maximum tree depth or minimum block size is reached). Blocks that are not further partitioned are also referred to as leaf blocks or leaf nodes of a tree. A tree partitioned into two partitions is referred to as a binary-tree (binary-tree, BT), a tree partitioned into three partitions is referred to as a ternary-tree (ternary-tree, TT), and a tree partitioned into four partitions is referred to as a quad-tree (quad-tree, QT).

For example, a coding tree unit (CTU) may be or include a CTB of luminance samples, two corresponding CTBs of chrominance samples of a picture that has three sample arrays, a CTB of samples of a monochrome picture, or a CTB of samples of a picture that is encoded by using three separate color planes and syntax structures (used to encode the samples). Correspondingly, a coding tree block (CTB) may be a block of $N \times N$ samples. N may be set to a specific value to obtain a CTB through splitting for a component. This is partitioning. A coding unit (coding unit, CU) may be or include a coding block of luminance samples, two corresponding coding blocks of chrominance samples of a picture that has three sample arrays, a coding block of samples of a monochrome picture, or a coding block of samples of a picture that is encoded by using three separate color planes and syntax structures (used to encode the samples). Correspondingly, a coding block (CB) may be a block of $M \times N$ samples. M and N may be set to specific values to split a CTB into coding blocks. This is partitioning.

In embodiments, for example, according to the HEVC, a coding tree unit (CTU) may be split into a plurality of CUs by using a quad-tree structure represented as a coding tree. Decision whether to code a picture area using inter (temporal) or intra (spatial) prediction is made at a leaf CU level. Each leaf CU may be further split into one, two or four PUs based on a PU splitting type. Inside one PU, a same prediction process is applied, and related information is transmitted to the decoder on a PU basis. After the residual block is obtained by applying the prediction process based on the PU splitting type, a leaf CU may be partitioned into transform units (TUs) based on another quad-tree structure similar to a coding tree for the CU.

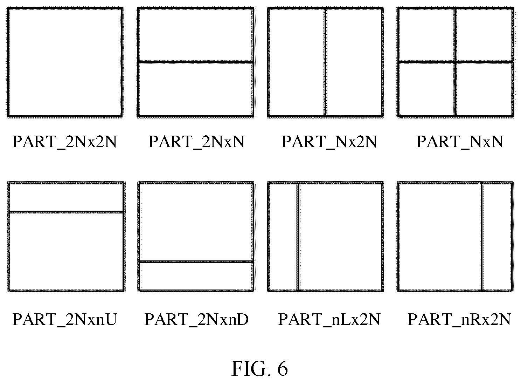

In embodiments, for example, according to the latest video coding standard (referred to as versatile video coding (VVC)) currently in development, a combined quad-tree nested multi-type trees (for example, a binary tree and a ternary tree) splits a segmentation structure used to partition a coding tree unit. In a coding tree structure in a coding tree unit, a CU may be square or rectangular. For example, the coding tree unit (CTU) is first partitioned by a quad-tree structure. A quad-tree leaf node is further partitioned by a multi-type tree structure. There are four splitting types in the multi-type tree structure: vertical binary-tree splitting (SPLIT_BT_VER), horizontal binary-tree splitting (SPLIT_BT_HOR), vertical ternary-tree splitting (SPLIT_TT_VER), and horizontal ternary-tree splitting (SPLIT_TT_HOR). The multi-type tree leaf node is referred to as a coding unit (CU), and unless the CU is too large for the maximum transform length, this segmentation is used for prediction and transform processing without any further partitioning. This means that, in most cases, the CU, the PU, and the TU have a same block size in a coding block structure in which a quad tree is nested with multi-type trees. An exception occurs when a maximum supported transform length is smaller than a width or height of a color component of the CU. A unique signaling mechanism of partitioning or splitting information in the coding structure in which the quad tree is nested with the multi-type trees is formulated in the VVC. In the signaling mechanism, a coding tree unit (CTU) is treated as the root of a quad-tree and is first partitioned by the quad-tree structure. Each quad-tree leaf node (when sufficiently large to allow it) is then further partitioned by the multi-type tree structure. In the multi-type tree structure, a first flag (mtt_split_cu_flag) indicates whether the node is further partitioned; when the node is further partitioned, a second flag (mtt_split_cu_vertical_flag) indicates a splitting direction; and then a third flag (mtt_split_cu_binary_flag) indicates whether the splitting is binary-tree splitting or ternary-tree splitting. Based on values of mtt_split_cu_vertical_flag and mtt_split_cu_binary_flag, the decoder may derive a multi-type tree split mode (MttSplitMode) of the CU based on a predefined rule or table. It should be noted that, for a specific design, for example, a 64×64 luminance block and 32×32 chrominance pipeline design in a VVC hardware decoder, TT splitting is not allowed when a width or a height of a luminance coding block is greater than 64, as shown in FIG. 6. TT splitting is also not allowed when a width or a height of a chrominance coding block is greater than 32. In the pipelining design, a picture is split into a plurality of virtual pipeline data units (virtual pipeline data units, VPDUs), and the VPDUs are defined as non-overlapping units in the picture. In the hardware decoder, consecutive VPDUs are simultaneously processed in a plurality of pipeline stages. A VPDU size is roughly proportional to a buffer size in most pipeline stages. Therefore, a small VPDU size needs to be kept. In most hardware decoders, the VPDU size may be set to a maximum transform block (transform block, TB) size. However, in the VVC, ternary-tree (TT) partitioning and binary-tree (BT) partitioning may lead to an increase in the VPDU size.

In addition, it should be noted that, when a portion of a tree node block exceeds the bottom or a right picture boundary, the tree node block is forced to be split until the all samples of every coded CU are located inside the picture boundaries.

For example, an intra sub-partition (intra sub-partition, ISP) tool may split a luminance intra predicted block vertically or horizontally into two or four sub-partitions based on a block size.

In one example, the mode selection unit 260 of the video encoder 20 may be configured to perform any combination of the partitioning techniques described above.

As described above, the video encoder 20 is configured to determine or select a best or optimal prediction mode from a (pre-determined) prediction mode set. The prediction mode set may include, for example, an intra prediction mode and/or an inter prediction mode.

Intra prediction

An intra prediction mode set may include 35 different intra prediction modes, for example, non-directional modes such as a DC (or average) mode and a planar mode, or directional modes such as those defined in the HEVC, or may include 67 different intra prediction modes, for example, non-directional modes such as a DC (or average) mode and a planar mode, or directional modes such as those defined in the VVC. For example, several conventional angular intra prediction modes are adaptively replaced with wide-angle intra prediction modes for non-square blocks as defined in the VVC. For another example, to avoid division operations for DC prediction, only a longer side is used to compute an average for the non-square blocks. In addition, results of intra prediction of the planar mode may be further modified by using a position dependent intra prediction combination (position dependent intra prediction combination, PDPC) method.

The intra prediction unit 254 is configured to use reconstructed samples of neighboring blocks of a same current picture to generate an intra predicted block 265 based on an intra prediction mode in the intra prediction mode set.

The intra prediction unit 254 (or usually the mode selection unit 260) is further configured to output an intra prediction parameter (or usually information indicating a selected intra prediction mode for a block) to be sent to the entropy encoding unit 270 in a form of a syntax element 266, to be included in the encoded picture data 21, so that the video decoder 30 may perform an operation, for example, receive and use a prediction parameter for decoding.

Inter prediction

In a possible implementation, an inter prediction mode set depends on available reference pictures (namely, previous at least partially decoded pictures, for example, stored in the DPB 230) and other inter prediction parameters, for example, whether the whole reference picture or only a part, for example, a search window area around the area of the current block, of the reference picture is used for searching for a best matching reference block, and/or for example, whether pixel interpolation is applied, for example, half/semi-pel, quarter-pel and/or 1/16 pel interpolation, or not.

In addition to the foregoing prediction modes, a skip mode and/or a direct mode may further be applied.

For example, a merge candidate list of an extended merge prediction mode includes the following five types of candidates in order: spatial MVP from spatial neighboring CUs, temporal MVP from collocated CUs, history-based MVP from an FIFO table, pairwise average MVP, and zero MVs. Bilateral matching-based decoder side motion vector refinement (decoder side motion vector refinement, DMVR) may be used to increase accuracy of the MVs of the merge mode. A merge mode with MVD (merge mode with MVD, MMVD) comes from a merge mode with motion vector differences. An MMVD flag is sent right after a skip flag and a merge flag are sent, to specify whether the MMVD mode is used for a CU. A CU-level adaptive motion vector resolution (adaptive motion vector resolution, AMVR) scheme may be used. AMVR supports encoding of an MVD of the CU at different precision. An MVD of a current CU may be adaptively selected based on a prediction mode of the current CU. When a CU is encoded in the merge mode, a combined inter/intra prediction (combined inter/intra prediction, CIIP) mode may be applied to the current CU. Weighted averaging is performed on inter and intra prediction signals to achieve CIIP prediction. For affine motion compensation prediction, an affine motion field of a block is described by using motion information of a motion vector of two control points (four parameters) or three control points (six parameters). Subblock-based temporal motion vector prediction (subblock-based temporal motion vector prediction, SbTMVP), which is similar to the temporal motion vector prediction (temporal motion vector prediction, TMVP) in HEVC, but predicts a motion vector of a sub-CU in a current CU. A bi-directional optical flow (bi-directional optical flow, BDOF), previously referred to as BIO, is a simpler version that requires much less computation, especially in terms of a quantity of multiplications and a value of a multiplier. In a triangle partition mode, a CU is split evenly into two triangular portions through diagonal splitting and anti-diagonal splitting. In addition, a bi-prediction mode is extended beyond simple averaging to allow weighted averaging of two prediction signals.

The inter prediction unit 244 may include a motion estimation (motion estimation, ME) unit and a motion compensation (motion compensation, MC) unit (both not shown in FIG.2). The motion estimation unit may be configured to receive or obtain the picture block 203 (the current picture block 203 of the current picture 17) and a decoded picture 231, or at least one or more previously reconstructed blocks, for example, reconstructed blocks of one or more other/different previously decoded pictures 231, for motion estimation. For example, a video sequence may include the current picture and the previously decoded picture 231, or in other words, the current picture and the previously decoded picture 231 may be part of or form a sequence of pictures forming the video sequence.

For example, the encoder 20 may be configured to select a reference block from a plurality of reference blocks of a same picture or different pictures of a plurality of other pictures and provide a reference picture (or a reference picture index) and/or an offset (spatial offset) between a position (x and y coordinates) of the reference block and a position of the current block as inter prediction parameters to the motion estimation unit. This offset is also referred to as a motion vector (motion vector, MV).

The motion compensation unit is configured to obtain, for example, receive, an inter prediction parameter and perform inter prediction based on or using the inter prediction parameter to obtain an inter predicted block 246. Motion compensation performed by the motion compensation unit may include extracting or generating a predicted block based on a motion/block vector determined through motion estimation, and may further include performing interpolation on sub-pixel precision. Interpolation filtering may generate additional pixel samples from known pixel samples, thus potentially increasing a quantity of candidate predicted blocks that may be used to encode a picture block. Upon receiving the motion vector corresponding to the PU of the current picture block, the motion compensation unit may locate a predicted block to which the motion vector points in one of the reference picture lists.

The motion compensation unit may further generate syntax elements related to a block and a video slice for use by the video decoder 30 in decoding picture blocks of the video slice. In addition or as an alternative to slices and corresponding syntax elements, tile groups and/or tiles and corresponding syntax elements may be generated or used.

Entropy encoding

The entropy encoding unit 270 is configured to apply, for example, an entropy coding algorithm or scheme (for example, a variable length coding (variable length coding, VLC) scheme, a context adaptive VLC (context adaptive VLC, CAVLC) scheme, an arithmetic coding scheme, a binarization algorithm, context adaptive binary arithmetic coding (context adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE) coding or another entropy coding methodology or technique) on the quantization residual coefficients 209, inter prediction parameters, intra prediction parameters, loop filter parameters and/or other syntax elements to obtain encoded picture data 21 which can be output via the output end 272, for example, in the form of an encoded bitstream 21, so that, for example, the video decoder 30 may receive and use the parameters for decoding. The encoded bitstream 21 may be transmitted to the video decoder 30, or stored in a memory for later transmission or retrieval by the video decoder 30.

Another structural variation of the video encoder 20 may be used to encode the video stream. For example, a non-transform-based encoder 20 may quantize a residual signal directly without the transform processing unit 206 for some blocks or frames. In another implementation, the encoder 20 may have the quantization unit 208 and the inverse quantization unit 210 combined into a single unit.

Decoder and decoding method

FIG. 3 is an example diagram of a structure of the video decoder 30 according to this application. The video decoder 30 is configured to receive, for example, the encoded picture data 21 (for example, the encoded bitstream 21) encoded by the encoder 20, to obtain a decoded picture 331. The encoded picture data or bitstream includes information for decoding the encoded picture data, for example, data that represents picture blocks of an encoded video slice (and/or tile groups or tiles), and related syntax elements.

In the example in FIG. 3, the decoder 30 includes an entropy decoding unit 304, an inverse quantization unit 310, an inverse transform processing unit 312, a reconstruction unit 314 (for example, an adder 314), a loop filter 320, a decoded picture buffer (DBP) 330, a mode application unit 360, an inter prediction unit 344 and an intra prediction unit 354. The inter prediction unit 344 may be or include a motion compensation unit. In some examples, the video decoder 30 may perform a decoding process generally reciprocal to the encoding process described with reference to the video encoder 20 in FIG. 2.

As explained with regard to the encoder 20, the inverse quantization unit 210, the inverse transform processing unit 212, the reconstruction unit 214, the loop filter 220, the decoded picture buffer DPB 230, the inter prediction unit 244, and the intra prediction unit 254 are further referred to as forming a "built-in decoder" of the video encoder 20. Accordingly, the inverse quantization unit 310 may be identical in function to the inverse quantization unit 210, the inverse transform processing unit 312 may be identical in function to the inverse transform processing unit 212, the reconstruction unit 314 may be identical in function to the reconstruction unit 214, the loop filter 320 may be identical in function to the loop filter 220, and the decoded picture buffer 330 may be identical in function to the decoded picture buffer 230. Therefore, the explanations provided for corresponding units and functions of the video encoder 20 are correspondingly applicable to corresponding units and functions of the video decoder 30.

Entropy decoding

The entropy decoding unit 304 is configured to parse the bitstream 21 (or in general encoded picture data 21) and perform, for example, entropy decoding on the encoded picture data 21 to obtain, for example, quantization coefficients 309 and/or decoded coding parameters (not shown in FIG. 3), for example, any or all of inter prediction parameters (for example, a reference picture index and a motion vector), intra prediction parameters (for example, an intra prediction mode or an index), transform parameters, quantization parameters, loop filter parameters, and/or other syntax elements. The entropy decoding unit 304 may be configured to apply a decoding algorithm or scheme corresponding to the encoding scheme of the entropy encoding unit 270 of the encoder 20. The entropy decoding unit 304 may be further configured to provide the inter prediction parameter, the intra prediction parameter, and/or another syntax element to the mode application unit 360 and another parameter to another unit of the decoder 30. The video decoder 30 may receive the syntax elements at the video slice level and/or the video block level. In addition or as an alternative to slices and corresponding syntax elements, tile groups and/or tiles and corresponding syntax elements may be received or used.

Inverse quantization

The inverse quantization unit 310 may be configured to receive a quantization parameter (quantization parameter, QP) (or in general information related to the inverse quantization) and quantization coefficients from the encoded picture data 21 (for example, parsed and/or decoded by the entropy decoding unit 304), and dequantize the decoded quantization coefficients 309 based on the quantization parameter, to obtain dequantization coefficients 311. The dequantization coefficients 311 may also be referred to as transform coefficients 311. The inverse quantization process may include use of a quantization parameter calculated by the video encoder 20 for each video block in a video slice to determine a degree of quantization and, likewise, a degree of inverse quantization that needs to be applied.

Inverse transform

The inverse transform processing unit 312 may be configured to receive the dequantization coefficients 311, also referred to as the transform coefficients 311, and apply a transform to the dequantization coefficients 311 to obtain a reconstructed residual block 313 in pixel domain. The reconstructed residual block 313 may also be referred to as a transform block 313. The transform may be an inverse transform, for example, an inverse DCT, an inverse DST, an inverse integer transform, or a conceptually similar inverse transform process. The inverse transform processing unit 312 may be further configured to receive transform parameters or corresponding information from the encoded picture data 21 (for example, by parsing and/or decoding, for example, by the entropy decoding unit 304) to determine the transform to be applied to the dequantization coefficients 311.

Reconstruction

The reconstruction unit 314 (for example, an adder 314) is configured to add the reconstructed residual block 313 to the predicted block 365 to obtain a reconstructed block 315 in the pixel domain, for example, by adding the sample values of the reconstructed residual block 313 and the sample values of the predicted block 365.

Filtering

The loop filter unit 320 (either in a coding loop or after the coding loop) is configured to filter the reconstructed block 315 to obtain a filtered block 321, to smooth pixel transitions or improve video quality. The loop filter unit 320 may include one or more loop filters such as a de-blocking filter, a sample-adaptive offset (sample-adaptive offset, SAO) filter or one or more other filters, for example, an adaptive loop filter (adaptive loop filter, ALF), a noise suppression filter (noise suppression filter, NSF), or any combination thereof. For example, the loop filter unit 220 may include a de-blocking filter, a SAO filter, and an ALF filter. An order of a filtering process may be the de-blocking filter, the SAO filter, and the ALF filter. For another example, a process called luma mapping with chroma scaling (luma mapping with chroma scaling, LMCS) (namely, an adaptive in-loop reshaper) is added. This process is performed before de-blocking. For another example, a de-blocking filter process may be also applied to internal sub-block edges, for example, affine sub-blocks edges, ATMVP sub-blocks edges, sub-block transform (sub-block transform, SBT) edges, and intra sub-partition (intra sub-partition, ISP) edges. Although the loop filter unit 320 is shown in FIG. 3 as being a loop filter, in other configurations, the loop filter unit 320 may be implemented as a post loop filter.

Decoded picture buffer

A buffer block 321 of a picture is then stored in the decoded picture buffer 330, and the decoded picture buffer 330 stores a decoded picture 331 as a reference picture, where the reference picture is used for subsequent motion compensation for other pictures and/or for output respectively display.
The decoder 30 is configured to output the decoded picture 331, for example, via an output end 332, for presentation or viewing to a user.

Prediction

The inter prediction unit 344 may be identical in function to the inter prediction unit 244 (in particular to the motion compensation unit) and the intra prediction unit 354 may be identical in function to the intra prediction unit 254, and performs splitting or partitioning decisions and prediction based on the partitioning and/or prediction parameters or respective information received from the encoded picture data 21 (for example, by parsing and/or decoding by the entropy decoding unit 304). The mode application unit 360 may be configured to perform prediction (intra or inter prediction) on each block based on a reconstructed picture or block or a corresponding sample (filtered or unfiltered), to obtain the predicted block 365.
When the video slice is coded as an intra coded (intra coded, I) slice, the intra prediction unit 354 of the mode application unit 360 is configured to generate the predicted block 365 for a picture block of the current video slice based on an indicated intra prediction mode and data from previously decoded blocks of the current picture. When the video picture is coded as an inter coded (for example, B, or P) slice, the inter prediction unit 344 (for example, the motion compensation unit) of the mode application unit 360 is configured to produce the predicted block 365 for a video block of the current video slice based on the motion vectors and other syntax elements received from the entropy decoding unit 304. For inter prediction, the predicted blocks may be generated from one reference picture in one reference picture list. The video decoder 30 may construct reference frame lists: a list 0 and a list 1, by using a default construction technology based on reference pictures stored in the DPB 330. The same or similar process may be applied for or by embodiments using tile groups (for example, video tile groups) and/or tiles (for example, video tiles) in addition or alternatively to slices (for example, video slices), for example, a video may be encoded using I, P or B tile groups and/or tiles.

The mode application unit 360 is configured to determine prediction information for a video block of the current video slice by parsing the motion vectors and other syntax elements, and use the prediction information to produce the predicted blocks for the current video block being decoded. For example, the mode application unit 360 uses some of the received syntax elements to determine a prediction mode (for example, intra or inter prediction) used to encode the video blocks of the video slice, an inter prediction slice type (for example, a B slice, a P slice, or a GPB slice), construction information for one or more of the reference picture lists for the slice, motion vectors for each inter coded video block of the slice, an inter prediction status for each inter coded video block of the slice, and other information to decode the video blocks in the current video slice. The same or similar process may be applied for or by embodiments using tile groups (for example, video tile groups) and/or tiles (for example, video tiles) in addition or alternatively to slices (for example, video slices), for example, a video may be encoded using I, P or B tile groups and/or tiles.

In an embodiment, the video decoder 30 shown in FIG. 3 may be further configured to partition and/or decode the picture by using slices (also referred to as video slices), where the picture may be partitioned or decoded using one or more slices (typically non-overlapping). Each slice may include one or more blocks (for example, CTUs) or one or more groups of blocks (for example, tiles in the H.265/HEVC/VVC standard and bricks in the VVC standard).

In an embodiment, the video decoder 30 shown in FIG. 3 may be further configured to partition and/or decode the picture by using slices/tile groups (also referred to as video tile groups) and/or tiles (also referred to as video tiles). The picture may be partitioned or decoded using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

Other variations of the video decoder 30 may be used to decode the encoded picture data 21. For example, the decoder 30 may generate an output video stream without the loop filter unit 320. For example, a non-transform-based decoder 30 may inversely quantize the residual signal directly without the inverse transform processing unit 312 for some blocks or frames. In another implementation, the video decoder 30 may have the inverse quantization unit 310 and the inverse transform processing unit 312 combined into a single unit.

It should be understood that, in the encoder 20 and the decoder 30, a processing result of a current step may be further processed and then output to a next step. For example, after interpolation filtering, motion vector derivation, or loop filtering, a further operation, for example, a clip (clip) or shift (shift) operation, may be performed on a processing result of the interpolation filtering, motion vector derivation, or loop filtering.

Although video encoding and decoding are mainly described in the foregoing embodiments, it should be noted that the embodiments of the coding system 10, the encoder 20, and the decoder 30 and other embodiments described in this specification may also be used for still picture processing or encoding and decoding, that is, processing or encoding and decoding of a single picture independent of any preceding or consecutive pictures in video encoding and decoding. In general, if picture processing is limited to a single picture, the inter prediction unit 244 (encoder) and the inter prediction unit 344 (decoder) may not be available. All other functions (also referred to as tools or technologies) of the video encoder 20 and the video decoder 30 may also be used for still picture processing, for example, the residual calculation unit 204, the transform processing unit 206, the quantization unit 208, the inverse quantization unit 210/310, the (inverse) transform processing unit 212/312, the partitioning unit 262, the intra prediction unit 254/354 and/or the loop filter unit 220/320, the entropy encoding unit 270, and the entropy decoding unit 304.

FIG. 4 is a diagram of a video coding device 400 according to this application. The video coding device 400 is suitable for implementing the disclosed embodiments as described in this specification. In an embodiment, the video coding device 400 may be a decoder such as the video decoder 30 in FIG. 1A or an encoder such as the video encoder 20 in FIG. 1A.

The video coding device 400 includes: ingress ports 410 (or input ports 410) and a receiver unit (receiver unit, Rx) 420 that are configured to receive data; a processor, logic unit, or central processing unit (central processing unit, CPU) 430 for processing data; a transmitter unit (transmitter unit, Tx) 440 and egress ports 450 (or output ports 450) that are configured to transmit data; and a memory 460 for storing data. The video coding device 400 may also include optical-to-electrical (optical-to-electrical, OE) components and electrical-to-optical (electrical-to-optical, EO) components coupled to the ingress ports 410, the receiver unit 420, the transmitter unit 440, and the egress ports 450 for egress or ingress of optical or electrical signals.

The processing unit 430 is implemented by using hardware and software. The processing unit 430 may be implemented as one or more processor chips, cores (for example, a multi-core processor), FPGAs, ASICs, and DSPs. The processing unit 430 is in communication with the ingress ports 410, the receiver unit 420, the transmitter unit 440, the egress ports 450, and the memory 460. The processing unit 430 includes a coding module 470. The coding module 470 implements the embodiments disclosed above. For example, the coding module 470 implements, processes, prepares, or provides various coding operations. Therefore, the coding module 470 provides a substantial improvement to functions of the video coding device 400 and affects switching of the video coding device 400 to a different state. Alternatively, the coding module 470 is implemented by using instructions stored in the memory 460 and executed by the processing unit 430.

The memory 460 may include one or more disks, tape drives, and solid-state drives and may be used as an overflow data storage device, to store programs when such programs are selected for execution, and to store instructions and data that are read during program execution. The memory 460 may be volatile and/or non-volatile, and may be a read-only memory (read-only memory, ROM), a random access memory (random access memory, RAM), a ternary content-addressable memory (ternary content-addressable memory, TCAM), and/or a static random access memory (static random-access memory, SRAM).

FIG. 5 is a simplified block diagram of an apparatus 500 according to this application. The apparatus 500 may be used as either or both of the source device 12 and the destination device 14 in FIG. 1A.

A processor 502 in the apparatus 500 can be a central processing unit. Alternatively, the processor 502 may be any other type of device or a plurality of devices that can manipulate or process information and that exist nowadays or will be developed in the future. Although the disclosed implementations can be implemented by using a single processor such as the processor 502 shown in the figure, advantages in speed and efficiency can be achieved by using more than one processor.

In an implementation, a memory 504 in the apparatus 500 may be a read-only memory (ROM) device or a random access memory (RAM) device. Any other appropriate type of storage device may be used as the memory 504. The memory 504 may include code and data 506 that are accessed by the processor 502 through a bus 512. The memory 504 may further include an operating system 508 and applications 510, the applications 510 including at least one program that permits the processor 502 to perform the methods described in this specification. For example, the applications 510 may include applications 1 to N, and further include a video coding application that performs the methods described in this specification.

The apparatus 500 may also include one or more output devices such as a display 518. In an example, the display 518 may be a touch-sensitive display that combines a display with a touch-sensitive element that may be configured to sense a touch input. The display 518 may be coupled to the processor 502 through the bus 512.

Although the bus 512 of the apparatus 500 is described as a single bus in this specification, the bus 512 may include a plurality of buses. Further, a secondary storage may be directly coupled to the other components of the apparatus 500 or may be accessed via a network, and may include a single integrated unit such as a memory card or a plurality of units such as a plurality of memory cards. Therefore, the apparatus 500 may have a variety of configurations.

For ease of understanding, the following first explains and describes some nouns or terms used in embodiments of this application. The nouns or terms are also used as a part of content of the present invention.

1. Neural network

A neural network (neural network, NN) is a machine learning model. The neural network may include neurons. The neuron may be an operation unit that uses $x_s$ and an intercept of 1 as inputs, where an output of the operation unit may be as follows:

$$h_{W,b}(x) = f(W^T x) = f(\sum_{s=1}^{n} W_s x_s + b) \quad (1-1)$$

Herein, s=1, 2, ..., or n, n is a natural number greater than 1, $W_s$ is a weight of $x_s$, b is bias of the neuron, and f is an activation function (activation function) of the neuron, and is used to introduce a non-linear characteristic into the neural network, to convert an input signal in the neuron into an output signal. The output signal of the activation function may be used as an input of a next convolutional layer. The activation function may be a non-linear function such as ReLU. The neural network is a network formed by linking many single neurons together. To be specific, an output of a neuron may be an input of another neuron. An input of each neuron may be connected to a local receptive field (local receptive field) of a previous layer to extract a feature of the local receptive field. The local receptive field may be a region including several neurons.

2. Multi-layer perceptron (multi-layer perceptron, MLP)

An MLP is a simple deep neural network (deep neural network, DNN) (different layers are fully connected), and is also referred to as a multi-layer neural network. The MLP may be understood as a neural network with many hidden layers. There is no special measurement criterion for "many" herein. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems complex, it is not complex in terms of work at each layer. Simply speaking, the work at each layer is as the following linear relationship expression: $\vec{y} = \alpha(W\vec{x} + \vec{b})$, where $\vec{x}$ is an input vector, $\vec{y}$ is an output vector, $\vec{b}$ is an offset vector, W is a weight matrix (also referred to as a coefficient), and $\alpha()$ is an activation function. At each layer, the output vector $\vec{y}$ is obtained by performing such a simple operation on the input vector $\vec{x}$. Because the DNN has a large quantity of layers, there are a large quantity of coefficients W and offset vectors $\vec{b}$. Definitions of these parameters in the DNN are as follows: The coefficient W is used as an example. It is assumed that in a DNN having three layers, a linear coefficient from the fourth neuron at the second layer to the second neuron at the third layer is defined as $W_{24}^{3}$. The superscript 3 represents a layer at which the coefficient W is located, and the subscript corresponds to an output third-layer index 2 and an input second-layer index 4. In conclusion, a coefficient from the k$^{th}$ neuron at the (L-1)$^{th}$ layer to the j$^{th}$ neuron at the L$^{th}$ layer is defined as $W_{jk}^{L}$. It should be noted that there is no parameter W for the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W of many layers).

3. Convolutional neural network

The convolutional neural network (convolutional neural network, CNN) is a deep neural network with a convolutional structure, and is a deep learning (deep learning) architecture. In the deep learning architecture, multi-layer learning is performed at different abstract levels according to a machine learning algorithm. As a deep learning architecture, the CNN is a feed-forward (feed-forward) artificial neural network, and each neuron in the feed-forward artificial neural network may respond to a picture input to the feed-forward artificial neural network. The convolutional neural network includes a feature extractor including a convolutional layer and a pooling layer. The feature extractor may be considered as a filter. A convolution process may be considered as using a trainable filter to perform convolution on an input picture or a convolutional feature plane (feature map).

The convolutional layer is a neuron layer that is in the convolutional neural network and at which convolution processing is performed on an input signal. The convolutional layer may include a plurality of convolution operators. The convolution operator is also referred to as a kernel. In picture processing, the convolution operator functions as a filter that extracts specific information from an input picture matrix. The convolution operator may essentially be a weight matrix, and the weight matrix is usually predefined. In a process of performing a convolution operation on a picture, the weight matrix usually processes pixels at a granularity level of one pixel (or two pixels, depending on a value of a stride (stride)) in a horizontal direction on the input picture, to extract a specific feature from the picture. A size of the weight matrix needs to be related to a size of the picture. It should be noted that a depth dimension (depth dimension) of the weight matrix is the same as a depth dimension of the input picture. In a process of performing a convolution operation, the weight matrix extends to an entire depth of the input picture. Therefore, a convolutional output of a single depth dimension is generated through convolution with a single weight matrix. However, in most cases, a single weight matrix is not used, but a plurality of weight matrices with a same size (rows×columns), namely, a plurality of same-type matrices, are applied. Outputs of the weight matrices are stacked to form a depth dimension of a convolutional picture. The dimension herein may be understood as being determined based on the foregoing "plurality". Different weight matrices may be used to extract different features from the picture. For example, one weight matrix is used to extract edge information of the picture, another weight matrix is used to extract a specific color of the picture, and still another weight matrix is used to blur unnecessary noise in the picture. Sizes (rows×columns) of the plurality of weight matrices are the same. Sizes of feature maps extracted by the plurality of weight matrices with the same size are also the same, and then the plurality of extracted feature maps with the same size are combined to form an output of the convolution operation. Weight values in these weight matrices need to be obtained through a large amount of training during actual application. Each weight matrix including weight values obtained through training may be used to extract information from an input picture, so that the convolutional neural network performs correct prediction. When the convolutional neural network has a plurality of convolutional layers, a large quantity of general features are usually extracted at an initial convolutional layer. The general feature may also be referred to as a low-level feature. As a depth of the convolutional neural network increases, a feature extracted at a subsequent convolutional layer is more complex, for example, a high-level semantic feature. A feature with higher-level semantics is more applicable to a to-be-resolved problem.

A quantity of training parameters often needs to be reduced. Therefore, a pooling layer often needs to be periodically introduced after a convolutional layer. One convolutional layer may be followed by one pooling layer, or a plurality of convolutional layers may be followed by one or more pooling layers. During picture processing, the pooling layer is only used to reduce a space size of the picture. The pooling layer may include an average pooling operator and/or a maximum pooling operator, to perform sampling on the input picture to obtain a picture with a small size. The average pooling operator may be used perform calculation on pixel values in the picture in a specific range, to generate an average value, and the average value is used as an average pooling result. The maximum pooling operator may be used for selecting a pixel with a largest value in a specific range as a maximum pooling result. In addition, similar to that the size of the weight matrix at the convolutional layer needs to be related to the size of the picture, an operator at the pooling layer also needs to be related to the size of the picture. A size of a processed picture output from the pooling layer may be less than a size of a picture input to the pooling layer. Each sample in the picture output from the pooling layer represents an average value or a maximum value of a corresponding sub-area of the picture input to the pooling layer.

After processing is performed at the convolutional layer/pooling layer, the convolutional neural network is not ready to output required output information, because as described above, at the convolutional layer/pooling layer, only a feature is extracted, and parameters resulting from the input picture are reduced. However, to generate final output information (required type information or other related information), the convolutional neural network needs to use the neural network layer to generate an output of one required type or a group of required types. Therefore, the convolutional neural network layer may include a plurality of hidden layers. Parameters included in the plurality of hidden layers may be obtained through pre-training based on related training data of a specific task type. For example, the task type may include picture recognition, picture classification, and super-resolution picture reconstruction.

Optionally, at the neural network layer, the plurality of hidden layers are followed by the output layer of the entire convolutional neural network. The output layer has a loss function similar to a categorical cross entropy, and the loss function is specifically used to calculate a prediction error. Once forward propagation of the entire convolutional neural network is completed, back propagation is started to update a weight value and a deviation of each layer mentioned above, to reduce a loss of the convolutional neural network and an error between a result output by the convolutional neural network by using the output layer and an ideal result.

4. Recurrent neural network

The recurrent neural network (recurrent neural network, RNN) is used to process sequence data. In a conventional neural network model, layers from an input layer to a hidden layer and to an output layer are fully connected, and nodes at each layer are not connected. Such a common neural network resolves many problems, but is still incapable of resolving many other problems. For example, to predict a next word in a sentence, a previous word usually needs to be used, because the previous word and the next word in the sentence are not independent. A reason why the RNN is referred to as the recurrent neural network is that a current output of a sequence is also related to a previous output of the sequence. A specific representation form is that the network memorizes previous information and applies the previous information to calculation of the current output. To be specific, nodes at the hidden layer are no longer disconnected but are connected, and an input of the hidden layer not only includes an output of the input layer, but also includes an output of the hidden layer at a previous moment. Theoretically, the RNN can process sequence data of any length. Training for the RNN is the same as training for a conventional CNN or DNN. An error back propagation algorithm is also used, but there is a difference: If the RNN is expanded, a parameter such as W of the RNN is shared. This is different from the conventional neural network described in the foregoing example. In addition, during use of a gradient descent algorithm, an output in each step depends not only on a network in a current step, but also on a network status in several previous steps. The learning algorithm is referred to as a back propagation through time (Back propagation Through Time, BPTT) algorithm.

Why is the recurrent neural network still required when the convolutional neural network is available? A reason is simple. In the convolutional neural network, there is a premise that elements are independent of each other, and an input and an output are also independent, such as a cat and a dog. However, in the real world, many elements are interconnected. For example, stocks change over time. For another example, a person says: "I love traveling, and my favorite place is Yunnan. I will go there when I have a chance." Herein, people should know that the person will go to "Yunnan". Because people perform inference from the context. However, how do machines do that? Then, the RNN emerges. The RNN is intended to make the machine capable of memorizing like a human. Therefore, an output of the RNN needs to depend on current input information and historical memorized information.

5. Loss function

In a process of training a deep neural network, it is expected that an output of the deep neural network is as much as possible close to a predicted value that is actually expected. Therefore, a predicted value of a current network and a target value that is actually expected may be compared, and then a weight vector of each layer of the neural network is updated based on a difference between the predicted value and the target value (certainly, there is usually an initialization process before first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, the difference between the predicted value and the target value" needs to be predefined. This is the loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

6. Back propagation algorithm

A convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to converge the error loss. The back propagation algorithm is an error-loss-centered back propagation motion intended to obtain a parameter, such as a weight matrix, of an optimal super-resolution model.

7. Generative adversarial network

The generative adversarial network (generative adversarial network, GAN) is a deep learning model. The model includes at least two modules: a generative model (Generative Model) and a discriminative model (Discriminative Model). The two modules learn from each other through gaming, to generate a better output. Both the generative model and the discriminative model may be neural networks, and may specifically be deep neural networks or convolutional neural networks. A basic principle of the GAN is as follows: Using a GAN for generating an image is used as an example, it is assumed that there are two networks: G (Generator) and D (Discriminator). G is a network for generating an image. G receives random noise z, and generates the image by using the noise, where the image is denoted as G(z). D is a discriminative network used to discriminate whether an image is "real". An input parameter of D is x, x represents an image, and an output D(x) represents a probability that x is a real image. If a value of D(x) is 1, it indicates that the image is 100% real. If a value of D(x) is 0, it indicates that the image cannot be real. In a process of training the generative adversarial network, an objective of the generative network G is to generate an image that is as real as possible to deceive the discriminative network D, and an objective of the discriminative network D is to distinguish between the image generated by G and a real image as much as possible. In this way, a dynamic "gaming" process, namely, "adversary" in the "generative adversarial network", exists between G and D. A final gaming result is that, in an ideal state, G may generate an image G(z) that is to be difficultly distinguished from a real picture, and it is difficult for D to discriminate whether the image generated by G is real, to be specific, D(G(z))=0.5. In this way, an excellent generative model G is obtained, and can be used to generate an image.

8. Golomb coding

In computer data storage, a bit is the smallest storage unit, and one bit stores a binary code of logical 0 or 1. Generally, a number is encoded in a binary mode. However, because different numbers are recorded with a same length in the binary mode, a lot of redundant information is generated. For example, binary codes with a same length of 255 and 1 are 11111111 and 00000001, and valid bits of the binary codes are 8 and 1. If any data is transmitted in a binary coding manner, a large amount of redundancy is generated, which increases a network load.

The Golomb coding (Exponential Golomb coding) is a lossless data compression method. It is a variable-length prefix code and is suitable for coding with a higher probability of occurrence of a small number than a large number. It uses a shorter code length to encode a smaller number and a longer code length to encode a larger number. The exponential Golomb coding is a form of the Golomb coding, and is a variable-length coding method commonly used in audio and video coding standards. All numbers are divided into different groups of equal sizes. A group with a smaller symbol value is allocated with a shorter code length, symbol lengths in a same group are basically equal, and the sizes of the groups increase exponentially.

It is assumed that a form, obtained by performing k-order exponential Golomb encoding, of a to-be-encoded number num is [MZeros] [1] [Info], where MZeros represents M zeros. An encoding process is as follows:

i. num is expressed in a binary mode (if a quantity of bits is less than k, add 0s to the most significant bits), and the least significant k bits are removed (if the quantity of bits is just k, num is 0) to obtain a number n.
ii. M is a binary quantity of bits of a number (n+1) minus 1.
iii. Place a k-bit binary string removed in the ith step to the least significant bit of (n+1) to obtain [1][Info].

Table 1 shows a diagram of codewords obtained by performing Golomb encoding on 0 to 9.

Table 1

| Sample n | Codewords obtained through Golomb encoding | | | |
|---|---|---|---|---|
| | k=0 | k=1 | k=2 | k=3 |
| 0 | 1 | 10 | 100 | 1000 |
| 1 | 010 | 11 | 101 | 1001 |
| 2 | 011 | 0100 | 110 | 1010 |
| 3 | 00100 | 0101 | 111 | 1011 |
| 4 | 00101 | 0110 | 01000 | 1100 |
| 5 | 00110 | 0111 | 01001 | 1101 |
| 6 | 00111 | 001000 | 01010 | 1110 |
| 7 | 0001000 | 001001 | 01011 | 1111 |
| 8 | 0001001 | 001010 | 01100 | 010000 |
| 9 | 0001010 | 001011 | 01101 | 010001 |

9. Block partition

The HEVC standard introduces a set of basic units based on quad-tree recursive splitting, including a coding unit (Coding Unit, CU), a prediction unit (Prediction Unit, PU), and a transform unit (Transform Unit, TU). In a HEVC encoder, an input picture is first split into a plurality of coding tree units (Coding Tree Units, CTUs) that have a same size and that do not overlap each other. A size of the CTU is determined by the encoder, and a maximum size of the CTU may be 64×64. In a subsequent encoding process, one CTU may be directly used as one CU, or may be further split into a plurality of CUs of a smaller size in a quad-tree recursive split manner. A CU split depth is determined based on a rate-distortion cost obtained through calculation. The encoder compares and balances different split modes, to select a split mode with a lowest rate-distortion cost for encoding. Finally, a CU located at a leaf node of a quad-tree is a basic unit for the encoder to perform subsequent prediction, transform, and encoding. Usually, during block partitioning, a shallow partitioning depth and a large CU are used for a flat and smooth area, and a deep partitioning depth and a small CU are used for an area with complex colors. In this way, processing of modules such as a prediction module, a transform module, and a quantization module is more convenient and accurate, and selection of a coding mode is more compliant with a picture feature of video content, thereby effectively improving coding efficiency.

The PU is a basic unit for the encoder to perform prediction, includes all prediction-related information, and is obtained by further splitting the CU. For a 2N×2N CU, there are eight optional split modes for the PU in total, including four symmetric modes: 2N×2N, N×N, 2N×N, an N×2N, and four asymmetric modes of 1:3 or 3:1 split, as shown in FIG. 6. The introduction of a plurality of split modes can make the prediction of a complex picture more accurate.

The TU is a basic unit for the encoder to perform transform and quantization. A size of a TU depends on a CU to which the TU belongs, and a CU is allowed to be further split in a quad-tree split manner to obtain a TU. A minimum size of a TU is 4×4, and a maximum size may reach 32×32. Depending on a content characteristic, the encoder can flexibly select the best split mode for the TU.

10. Intra block copy (Intra Block Copy, IBC)

The IBC is an important tool for screen content coding in the HEVC screen content coding (Screen Content Coding, SCC) standard. It is a block-based prediction technology, and its mechanism is similar to inter prediction or motion compensation. The motion compensation means that, for a current prediction unit, an encoder finds, according to a motion search algorithm, an optimal match block in a previously encoded reference picture as a predicted value, and a motion vector (Motion Vector, MV) indicates the matching relationship. A difference obtained by subtracting the predicted value from a pixel value of the current prediction unit is used as a prediction residual. The prediction residual is output to a bitstream after being processed by modules such as a transform module, a quantization module, and an entropy encoding module.

A main difference between the IBC and the motion compensation is that a reference sample of the IBC is obtained from inside of a current image (a reconstructed part), and there is a block vector (Block Vector, BV) similar to the motion vector to indicate a block matching relationship. The IBC can better process screen content having a plurality of similar graphics or words in a video frame, that is, a current block may be a block having a similar graphic in a current image, and a prediction residual whose pixel value is close to 0 may be obtained. This residual occupies a very small bit rate in a bitstream. An encoding process of a syntax structure and related information that are included in the remaining part of the IBC is almost the same as the motion compensation.

This application provides a word-including picture encoding method and a word-including picture decoding method, to resolve a problem that in a word-including picture encoding and decoding process, because pixels of a same word are classified into different CTUs or CUs, accuracy and efficiency of word content compression may be low.

FIG. 2 describes a structure and a principle of a standard video encoding module system, and FIG. 3 describes a structure and a principle of a standard video decoding system. In this application, a coding scheme for a word in a picture is added based on this.

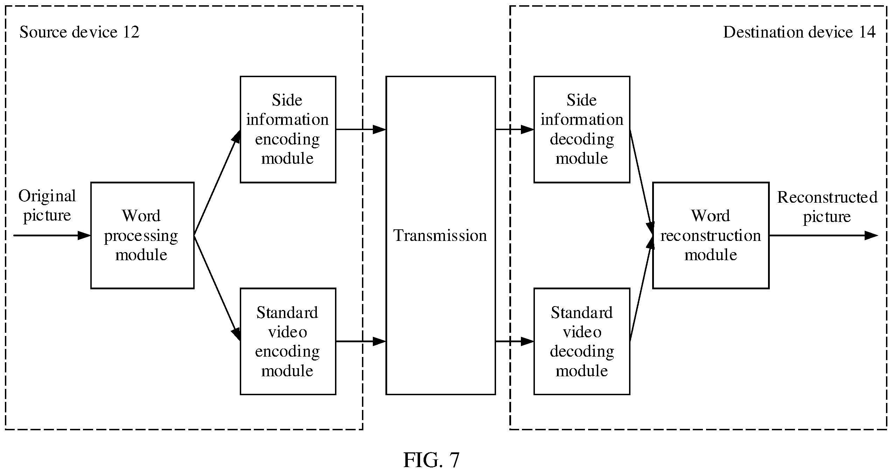

FIG. 7 is an example block diagram of a coding system 70 according to this application. As shown in FIG. 7, compared with a standard video encoding and decoding system (for example, the coding system 10), on an encoder side (for example, a source device 12), a word processing module and a word alignment side information encoding module are added in addition to a standard video encoding module (for example, an encoder 20); and on a decoder side (for example, a destination device 14), a word alignment side information decoding module and a word reconstruction module are added in addition to a standard video decoding module (for example, a decoder 30). The added modules are independent of the standard video encoding/decoding process and form the improved coding system 70 together with the standard video encoding/decoding process.

Functions of the foregoing modules are as follows:

Word processing module

    1. Detection: extract a word area and a non-word area from an original picture (namely, a to-be-encoded picture).
    2. Partitioning: obtain a complete character or character row in the word area through partitioning.
    3. Adaptive alignment: align the partitioned character or character row with a block partition grid. In this case, a position of the aligned character or character row is offset relative to an original position.

Word alignment side information encoding module: encode word alignment side information (for example, original coordinates of a character, a size of a character box, and a size of a filling box) generated by the word processing module, for word reconstruction on the decoder side.

Standard video encoding module: perform standard mixed video encoding on the non-word area and the aligned word area separately.

Standard video decoding module: perform standard mixed video decoding on a bitstream to obtain the non-word area and the aligned word area.

Word alignment side information decoding module: decode the bitstream to obtain the word alignment side information (for example, the original coordinates of the character, the size of the character box, and the size of the filling box).

Word reconstruction module

    1. Word restoration: restore the word area in the correct position from the aligned word area based on the word alignment side information.
    2. Area splicing: merge the word area in the correct position and the non-word area to form a complete reconstructed picture.

Based on the coding system 70 shown in FIG. 7, the following describes the solutions provided in this application.

FIG. 8 is a flowchart of a process 800 of the word-including picture encoding method according to an embodiment of this application. The process 800 may be performed by the video encoder 20. The process 800 is described as a series of steps or operations. It should be understood that the process 800 may be performed in various sequences and/or simultaneously, and is not limited to an execution sequence shown in FIG. 8. It is assumed that a current picture block of a current video frame of a video data stream including a plurality of video frames is being encoded by the video encoder 20 using the process 800 including the following steps.

Step 801: Obtain a word area in a first picture, where the word area includes at least one character.

The first picture may be an independent image, or may be any video frame in a video. This is not specifically limited. In this embodiment of this application, the first picture may include the word area. There may be only one or more word areas. A quantity of word areas may depend on a quantity of characters included in the first picture, a character distribution rule, a character size, and the like. This is not specifically limited. In addition, the word area may include one character, that is, the word area includes only one character; the word area includes one character row, and the character row includes a plurality of characters; or the word area includes one character column, and the character column includes a plurality of characters. The foregoing character may be a Chinese character, a Chinese phonetic letter, an English letter, a digit, or the like. This is not specifically limited.

In this embodiment of this application, the word area in the first picture may be obtained by using the following four methods.

In a first method, character recognition is performed on the first picture to obtain the word area.

Binarization and corrosion may be first performed on the first picture. Usually, in a binarized picture, a sample corresponding to a word area is white, and a sample corresponding to a non-word area is black. Corrosion may be used to deal with pixel adhesion between characters. Then, horizontal projection is performed on a picture obtained through the binarization and corrosion, and a quantity of white samples (corresponding to the word area) in a horizontal direction is calculated. A quantity of white samples on a horizontal line having a character is not 0. Therefore, all character rows in the picture can be obtained based on this.

The following operations are performed on each character row: extracting a connected component (the connected component refers to a continuous white sample area, one character is a connected component, and correspondingly, one character row may have a plurality of connected components); and selecting a character box of a proper size. When the character box includes only one character, a size of the character box is greater than or equal to a size of a largest connected component in a character row, and all characters in a same character row use character boxes of a same size. When the character box includes one character row or character column, a size of the character box is greater than or equal to a sum of sizes of all connected components in the character row or character column. For example, a connected component of a character 1 in a character row occupies a pixel space of 6 (width)×10 (height), and a connected component of a character 2 occupies a pixel space of 11×8. In this case, a character box of at least 11×10 needs to be selected to respectively include the two characters, or a character box of at least 17×10 needs to be selected to include the two characters of the character row. In this embodiment of this application, an area covered by the character box in the first picture may be referred to as the word area, that is, the word area and the character box refer to a same area range in the first picture.

Therefore, the first picture may be recognized by using the foregoing method, to obtain the word area.

In a second method, character recognition is performed on the first picture to obtain an intermediate word area, where the intermediate word area includes a plurality of character rows; and row splitting is performed on the intermediate word area by character row to obtain the word area.

A difference from the first method lies in that, in the second method, the intermediate word area may be obtained through character recognition, where the intermediate word area may include the plurality of character rows; and then row splitting is performed on the intermediate word area to obtain a plurality of word areas of which each includes only one character row. The method may be used in a case in which characters are arranged horizontally. For example, a plurality of characters are arranged from left to right and from top to bottom.

In a third method, character recognition is performed on the first picture to obtain an intermediate word area, where the intermediate word area includes a plurality of character columns; and column splitting is performed on the intermediate word area by character column to obtain the word area.

A difference from the first method lies in that, in the third method, the intermediate word area may be obtained through character recognition, where the intermediate word area may include the plurality of character rows; and then column splitting is performed on the intermediate word area to obtain a plurality of word areas of which each includes only one character column. The method may be used in a case in which characters are arranged vertically. For example, a plurality of characters are arranged from top to bottom and from left to right.

In a fourth method, character recognition is performed on the first picture to obtain an intermediate word area, where the intermediate word area includes a plurality of character rows or a plurality of character columns; and row splitting and column splitting are performed on the intermediate word area by character to obtain the word area.

A difference from the first method lies in that, in the fourth method, the intermediate word area may be obtained through character recognition, where the intermediate word area may include the plurality of character rows or the plurality of character columns; and then row splitting and column splitting are performed on the intermediate word area to obtain a plurality of word areas of which each includes only one character. The method may be used in a case in which characters are arranged horizontally or vertically. For example, a plurality of characters are arranged from top to bottom and from left to right. For another example, a plurality of characters are arranged from top to bottom and from left to right.

It should be noted that, in addition to the foregoing four methods, in this embodiment of this application, another method may be used to obtain the word area in the first picture. This is not specifically limited.

Step 802: Fill the word area to obtain a word filling area, where a height or a width of the word filling area is n times a preset size, and n≥1.

The preset size may be one of 8, 16, 32, and 64. In this embodiment of this application, a related encoding and decoding method may be used to encode a picture. In the related encoding and decoding method, the picture usually needs to be split to obtain a CU, and subsequent processing is performed based on the CU. A size of the CU may be one of 8, 16, 32, and 64. In this embodiment of this application, the preset size may be determined based on the size of the CU. For example, if the size of the CU is 8, the preset size may be 8 or 16; or if the size of the CU is 32, the preset size may be 32.

In this embodiment of this application, the word filling area may be obtained by filling the word area. Therefore, the height of the word filling area is greater than or equal to a height of the word area, and/or the width of the word filling area is greater than or equal to a width of the word area. The foregoing case in which the height of the word filling area is equal to a height of the word area, and/or the width of the word filling area is equal to a width of the word area may mean that the height and/or the width of the word area is just n times the preset size. Therefore, the word area does not need to be filled, and a subsequent step is performed by using the word area directly as the word filling area. In addition, as described in step 801, when the word area is obtained, heights and/or widths of word areas of characters in a same row or a same column are kept consistent. Correspondingly, when the word filling area is obtained, heights and/or widths of word areas in a same row or a same column are also kept consistent. In this way, it can be ensured that the height of the word filling area is consistent with a height of the CU obtained through splitting in the related encoding and decoding method, or/and the width of the word filling area is consistent with a width of the CU obtained through splitting in the related encoding and decoding method. In this embodiment of this application, the foregoing effect may also be referred to as that the word filling area is aligned with the CU obtained through splitting in the related encoding and decoding method.

In a possible implementation, the height of the word filling area is n times the preset size. For example, if the height of the word area is 10, and the preset size is 8, the height of the word filling area may be 16 (twice of 8). For another example, if the height of the word area is 10, and the preset size is 16, the height of the word filling area may be 16 (one time of 16).

In a possible implementation, the width of the word filling area is n times the preset size. For example, if the width of the word area is 17, and the preset size is 8, the width of the word filling area may be 24 (three times of 8). For another example, if the width of the word area is 17, and the preset size is 16, the width of the word filling area may be 32 (twice of 16).

In a possible implementation, the height of the word filling area is n1 times the preset size, and the width of the word filling area is n2 times the preset size, where n1 and n2 may be equal or may not be equal. For example, if a size of the word area is 6 (width)×10 (height), and the preset size is 8, a size of the word filling area may be 8 (one time of 8)×16 (twice of 8). For another example, if a size of the word area is 17×10, and the preset size is 16, a size of the word filling area may be 32 (twice of 16)×16 (one time of 16).

In this embodiment of this application, the following three methods may be used to fill the word area to obtain the word filling area.

In a first method, the height of the word filling area is obtained based on the height of the word area, where the height of the word filling area is n times the preset size; and the word area is filled in a vertical direction of the word area to obtain the word filling area, where a height of filling is a difference between the height of the word filling area and the height of the word area.

As described above, the height of the word filling area is greater than the height of the word area, and the height of the word filling area is n times the preset size. Based on this, the height of the word filling area may be obtained based on the height of the word area. Refer to the foregoing example. Optionally, if the height of the word area is exactly n times the preset size, the word area does not need to be filled. In this case, the height of the word filling area is equal to the height of the word area. After the height of the word filling area is obtained, the word area may be filled in the vertical direction of the word area (for example, on an upper side, in the middle, or on a lower side of the word area, which is not specifically limited), where the height of filling is the difference between the height of the word filling area and the height of the word area. For example, if the height of the word filling area is 16, and the height of the word area is 10, the height of filling is 6. A pixel value of filling may be a pixel value of a background pixel other than a character pixel in the word area, and the pixel value of filling may alternatively be a preset pixel value, for example, 0 or 255. This is not specifically limited.

In a second method, the width of the word filling area is obtained based on the width of the word area, where the width of the word filling area is n times the preset size; and the word area is filled in a horizontal direction of the word area to obtain the word filling area, where a width of filling is a difference between the width of the word filling area and the width of the word area.

As described above, the width of the word filling area is greater than the width of the word area, and the width of the word filling area is n times the preset size. Based on this, the width of the word filling area may be obtained based on the width of the word area. Refer to the foregoing example. Optionally, if the width of the word area is exactly n times the preset size, the word area does not need to be filled. In this case, the width of the word filling area is equal to the width of the word area. After the width of the word filling area is obtained, the word area may be filled in the horizontal direction of the word area (for example, on a left side, in the middle, or on a right side of the word area, which is not specifically limited), where the width of filling is the difference between the width of the word filling area and the width of the word area. For example, if the width of the word filling area is 24, and the width of the word area is 17, the width of filling is 7. A pixel value of filling may be a pixel value of a background pixel other than a character pixel in the word area, and the pixel value of filling may alternatively be a preset pixel value, for example, 0 or 255. This is not specifically limited.

A third method may be a combination of the first method and the second method, that is, after the height and the width of the word filling area are obtained, the first two methods are respectively used to fill the word area in the vertical direction and the horizontal direction of the word area, to obtain the word filling area.

It can be learned that, the size of the word filling area obtained through filling is in a multiple relationship with the size of the CU. Therefore, after such a word filling area is split, the word filling area may cover a complete CU, that is, a case in which the word filling area covers a part of a CU does not occur, and a same CU does not cover two word filling areas, thereby implementing alignment between the word area and the CU in splitting.

Step 803: Obtain a second picture based on the word filling area.

In this embodiment of this application, a new picture, namely, the second picture, may be obtained based on the word filling area. The second picture includes the character in the original first picture. Obtaining the second picture includes the following four cases:

1. When there is only one word filling area, the word filling area is used as the second picture.

In a case in which there is only one word filling area, the word filling area may be directly used as the second picture.

2. When there are a plurality of word filling areas, and each of the word filling areas includes one character row, the plurality of word filling areas are spliced from top to bottom to obtain the second picture.

One word filling area includes one character row. In this case, the word filling areas to which a plurality of character rows respectively belong may be spliced from top to bottom based on distribution of character rows in the first picture, to be specific, a word filling area to which a character row arranged at the top in the first picture belongs is also spliced at the top, a word filling area to which a character row arranged in the second row in the first picture is also spliced in the second row, and the rest may be deduced by analogy. It should be noted that, in this embodiment of this application, splicing may be alternatively performed from bottom to top, and a splicing order is not specifically limited.

3. When there are a plurality of word filling areas, and each of the word filling areas includes one character column, the plurality of word filling areas are spliced from left to right to obtain the second picture.

One word filling area includes one character column. In this case, the word filling areas to which a plurality of character columns respectively belong may be spliced from left to right based on distribution of character columns in the first picture, to be specific, a word filling area to which a character column arranged on the leftmost side in the first picture belongs is also spliced on the leftmost side, a word filling area to which a character column arranged in the second column in the first picture is also spliced in the second column, and the rest may be deduced by analogy. It should be noted that, in this embodiment of this application, splicing may be alternatively performed from right to left, and a splicing order is not specifically limited.

4. When there are a plurality of word filling areas, and each of the word filling areas includes one character, the plurality of word filling areas are spliced from left to right and from top to bottom to obtain the second picture, where a plurality of word filling areas in a same row have a same height, or a plurality of word filling areas in a same column have a same width.

One word filling area includes one character. In this case, the word filling areas to which a plurality of characters respectively belong may be spliced from left to right and from top to bottom based on distribution of characters in the first picture. An arrangement order of the word filling areas is consistent with an arrangement order of the characters included in the word filling areas in the first picture, and the plurality of word filling areas in the same row have the same height, or the plurality of word filling areas in the same column have the same width.

It should be noted that, in this embodiment of this application, splicing may be alternatively performed in another order, and a splicing order is not specifically limited.

Step 804: Encode the second picture and word alignment side information to obtain a first bitstream, where the word alignment side information includes the height or the width of the word filling area.

In this embodiment of this application, standard video encoding or IBC encoding may be performed on the second picture. This is not specifically limited. When IBC encoding is used, if a character in a CU being currently encoded already appears in an encoded CU, the encoded CU may be determined as a predicted block of the CU being currently encoded. In this way, a probability that an obtained residual block is 0 is very high, thereby improving encoding efficiency of the current CU. The word alignment side information may be encoded in an exponential Golomb encoding manner, or may be encoded in another encoding manner. This is not specifically limited either. In this embodiment of this application, the height or the width of the word filling area may be directly encoded, or the times n of the height or the width of the word filling area to the preset size may be encoded. This is not specifically limited.

Optionally, the word alignment side information further includes the height and the width of the word area, and a horizontal coordinate and a vertical coordinate of a pixel in an upper left corner of the word area in the first picture. The information can assist the decoder side in restoring the word area in a reconstructed picture, thereby improving decoding efficiency.

In a possible implementation, a pixel value in the word area in the first picture may be filled with a preset pixel value to obtain a third picture; and the third picture is encoded to obtain a second bitstream.

In the foregoing steps, the word area is recognized from the first picture, then the word area is filled to obtain the word filling areas, and the second picture is obtained by splicing the word filling areas. It can be learned that the second picture includes only character content in the first picture, and the second picture is separately encoded. However, in addition to the character, the first picture includes other content. Therefore, to maintain integrity of the picture, other picture content other than the character further needs to be processed and encoded.

In this embodiment of this application, a pixel value of a pixel of the recognized word area in the original first picture may be filled with the preset pixel value (for example, 0, 1, or 255, which is not limited). This is equivalent to removing the word area from the first picture and replacing the pixel value with a pixel value of a non-character pixel value. A difference between the third picture obtained in this way and the first picture is that pixel values of the word area are different. Standard video encoding or IBC encoding may also be performed on the third picture. This is not specifically limited.

In this embodiment of this application, the word area obtained through recognition in the original picture is filled, so that a size of the obtained word filling area matches a size of a CU for encoding, to implement alignment between the word filling area and the CU, so as to avoid, as much as possible, classifying pixels of a same character into different CUs, and improve accuracy and efficiency of word content compression.

FIG. 9 is a flowchart of a process 900 of the word-including picture decoding method according to an embodiment of this application. The process 900 may be performed by the video decoder 30. The process 900 is described as a series of steps or operations. It should be understood that the process 900 may be performed in various sequences and/or simultaneously, and is not limited to an execution sequence shown in FIG. 9. It is assumed that a bitstream is being decoded by the video decoder 30 using the process 900 including the following steps to reconstruct a picture.

Step 901: Obtain the bitstream.

The decoder side may receive the bitstream from the encoder side.

Step 902: Decode the bitstream to obtain a first picture and word alignment side information, where the word alignment side information includes a height or a width of a word filling area included in the first picture, and the height or the width of the word filling area is n times a preset size, and n≥1.

The decoder side may obtain the first picture and the word alignment side information through decoding. A decoding manner may correspond to an encoding manner used by the encoder side. The encoder side may encode a picture by using standard video encoding or IBC encoding, and the decoder side may decode the bitstream by using standard video decoding or IBC decoding to obtain the reconstructed picture. The encoder side encodes word alignment side information by using exponential Golomb encoding, and the decoder side may decode the bitstream by using exponential Golomb decoding to obtain the word alignment side information.

The height or width of the word filling area is n times the preset size, where n≥1; and the preset size is one of 8, 16, 32, and 64. For details, refer to the foregoing descriptions in step 802. Details are not described herein again.

Step 903: Obtain the word filling area based on the first picture and the height or the width of the word filling area.

After determining the height or the width of the word filling area, the decoder side may extract a corresponding pixel value from the first picture based on the height or the width to obtain the word filling area.

Step 904: Obtain a word area in a to-be-reconstructed picture based on the word filling area.

In this embodiment of this application, the word alignment side information further includes a height and a width of the word area. Therefore, based on the height and the width of the word area, a corresponding pixel value may be extracted from the word filling area to obtain the word area in the to-be-reconstructed picture. The word area corresponds to the word area in step 801, and may include one character; may include one character row, and the character row includes a plurality of characters; or may include one character column, and the character column includes a plurality of characters.

In a possible implementation, the decoder side may decode the bitstream to obtain a second picture, and obtain the to-be-reconstructed picture based on the word area and the second picture.

The word alignment side information further includes the height and the width of the word area, and a horizontal coordinate and a vertical coordinate of a pixel in an upper left corner of the word area. Based on this, a replacement area in the second picture may be determined based on the height and the width of the word area and the horizontal coordinate and the vertical coordinate of the pixel in the upper left corner of the word area; and a pixel value in the replacement area is filled with a pixel value in the word area to obtain the to-be-reconstructed picture. The process may be reverse to the process of obtaining the third picture in the embodiment shown in FIG. 8, that is, filling the word area into the second picture (corresponding to the third picture in the embodiment shown in FIG. 8), to obtain the reconstructed picture (corresponding to the first picture in the embodiment shown in FIG. 8). After a horizontal coordinate and a vertical coordinate of the pixel in the upper left corner of the word area in the second picture, and the height and the width of the word area are obtained, the replacement area in the second picture may be determined, and then a pixel value in a filling area is filled with the pixel value of the word area. This is equivalent to removing the replacement area from the second picture and replacing the pixel value in the filling area with the pixel value of the word area.

In this embodiment of this application, alignment information of the word area may be obtained by parsing the bitstream, to obtain a character filling area including a character. A size of the character filling area matches a size of a CU for decoding, to implement alignment between the word filling area and the CU, so as to improve accuracy and efficiency of word content compression.

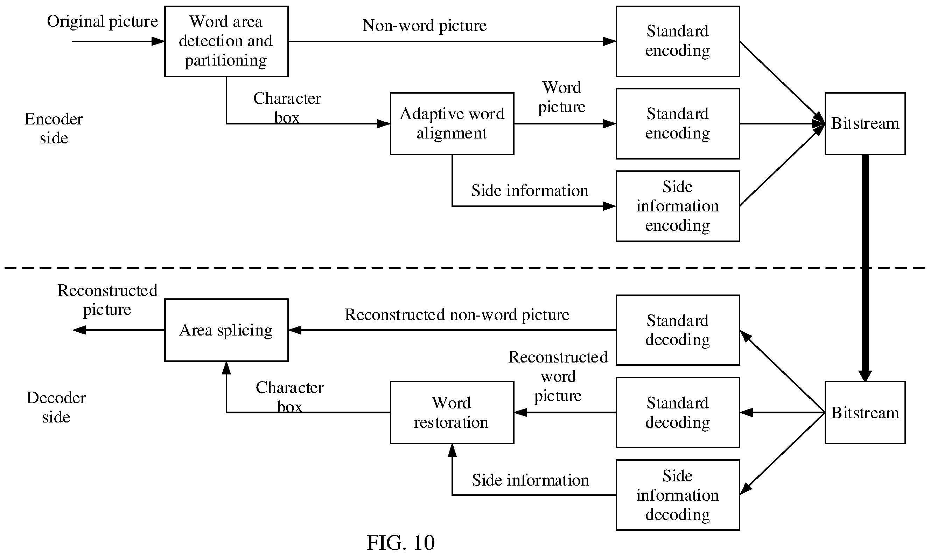

FIG. 10 is an example block diagram of a coding system 100 according to this application. As shown in FIG. 10, the coding system 100 includes an encoder side and a decoder side.

Encoder side

1. Word area detection and partitioning

An original picture is processed by using an existing word detection and partitioning method, to output a word area. Any word area may include one or more characters. When one word area includes a plurality of characters, the plurality of characters are characters in a same character row in the original picture. In this embodiment of this application, the word area may be a rectangular area. Therefore, the word area may be referred to as a character box. A position of one or more characters included in the character box may be represented by coordinates and sizes (including a height, or a height and a width) of an upper left corner of the character box in the original picture.

In this embodiment of this application, word area detection and partitioning may be implemented by using an existing method based on a horizontal projection histogram or connected component. Details are as follows:

(1) Pre-processing: perform binarization and corrosion on the original picture. In a binarized picture, a sample corresponding to a word area is white, and a sample corresponding to a non-word area is black. Corrosion is used to deal with pixel adhesion between characters.

(2) Perform horizontal projection on a pre-processed picture, and calculate a quantity of white samples in a horizontal direction.

A quantity of white samples on a horizontal line having a character is not 0. Therefore, all character rows in the picture can be obtained.

Then, the following operations are performed on each character row: extracting a connected component (the connected component refers to a continuous white sample area, one character is a connected component, and correspondingly, one character row may have a plurality of connected components); and selecting a character box of a proper size. When the character box includes only one character, a size of the character box is greater than or equal to a size of a largest connected component in a character row, and all characters in a same character row use character boxes of a same size. When the character box includes one character row, a size of the character box is greater than or equal to a sum of sizes of all connected components in the character row. For example, a connected component of a character 1 in a character row occupies a pixel space of 6 (width)$\times$10 (height), and a connected component of a character 2 occupies a pixel space of $11\times8$. In this case, a character box of at least $11\times10$ needs to be selected to respectively include the two characters, or a character box of at least $17\times10$ needs to be selected to include the two characters of the character row.

In this embodiment of this application, the foregoing word area detection and partitioning method may be implemented by the word processing module in FIG. 7. It should be understood that the word processing module may also implement word area detection and partitioning by using a deep neural network-based method. This is not specifically limited.

After the word area is obtained, a pixel value in the word area in the original picture is filled with a preset pixel value, so that the word area can be removed from the original picture, thereby obtaining a non-word picture with all characters removed from the original picture.

2. Adaptive word alignment

The character box is filled into a character filling box with a width of Kw and a height of Kh, where Kw and Kh may be equal or unequal. In the HEVC standard, a size of a CU includes 8, 16, 32, and 64. In this embodiment of this application, Kw and Kh each may be a multiple of 8, 16, 32, or 64. In the character filling box, a preset pixel value may be filled in an area other than an area occupied by the character box, for example, a pixel value of a background area in the character box.

It can be learned that a plurality of character filling boxes may be obtained based on a plurality of character boxes, and the plurality of character filling boxes are spliced. Character filling boxes to which characters in a same character row in the original picture belong are spliced into a word area that is of the character row and that is aligned with a block partition grid. If there are a plurality of character rows, when a height of a character filling box of a current character row is the same as that of a previous row, the character filling box in the current character row may be spliced to the right side of a word area that is of the previous row and that is aligned with a block partition grid, or the character filling box in the current character row may be spliced below a word area that is of the previous row and that is aligned with a block partition grid. When a height of a character filling box of a current character row is different from that of a previous row, the character filling box in the current character row may be spliced below a word area that is of the previous row and that is aligned with a block partition grid. After adaptive alignment of all the character rows is completed, a complete aligned word area may be obtained, so as to obtain a frame of picture (which may be referred to as a word picture) that includes all characters in the original picture. It should be noted that, in this embodiment of this application, a width of the aligned word area may not exceed a width of the original picture, or may be another width. This is not specifically limited.

In this embodiment of this application, the foregoing adaptive word alignment method may be implemented by the word processing module in FIG. 7.

3. Word alignment side information encoding

In the foregoing two steps, a width and a height of the character box, a width and a height of the character filling box, and a vertical coordinate and a horizontal coordinate of a character in a row may be obtained. The information helps the decoder side to restore a word area in a correct position. Therefore, the foregoing information is used as the word alignment side information for encoding to obtain a bitstream of word alignment side information. It should be noted that a method for encoding the word alignment side information is not specifically limited in embodiments of this application.

In this embodiment of this application, the foregoing method for encoding the word alignment side information may be implemented by the word alignment side information encoding module in FIG. 7.

4. Standard encoding

The word picture and the non-word picture that are obtained in the foregoing steps may be encoded by using a standard video encoding method. For example, a standard encoder that may be used may be an encoder that complies with standards such as H.264, H.265, H.266, AVS3, and AV1. This is not specifically limited in embodiments of this application.

In this embodiment of this application, the foregoing standard encoding method may be implemented by the standard video encoding module in FIG. 7.

5. Bitstream transmission

The encoder side transmits a bitstream to the decoder side.

In this embodiment of this application, the foregoing bitstream transmission method may be implemented by a transmission module in FIG. 7.

6. Word alignment side information decoding

The decoder side decodes the bitstream by using a decoding method corresponding to the encoder side, so as to obtain the word alignment side information, where the word alignment side information may include the width and the height of the character box, the width and the height of the character filling box, and the vertical coordinate and the horizontal coordinate of the character in the row.

In this embodiment of this application, the foregoing method for decoding the word alignment side information may be implemented by the word alignment side information decoding module in FIG. 7.

7. Standard decoding

The decoder side decodes the bitstream by using a decoding method corresponding to the encoder side, so as to obtain a reconstructed word picture and a reconstructed non-word picture.

In this embodiment of this application, the foregoing standard decoding method may be implemented by the standard video decoding module in FIG. 7.

8. Word restoration

The character filling box is first obtained from the word picture based on the word alignment side information, and then the character box is extracted from the character filling box.

9. Area splicing

A corresponding position in the reconstructed non-word picture is found based on coordinate information in the word alignment side information, and a pixel value in the character frame is used to replace a pixel value of the found corresponding position in the reconstructed non-word picture, to obtain a reconstructed picture.
In this embodiment of this application, the foregoing word restoration method may be implemented by the word reconstruction module in FIG. 7.
Based on the coding system 100 shown in FIG. 10, the following uses several specific embodiments to describe in detail the technical solutions of the foregoing method embodiments.

**Embodiment 1**

Encoder side

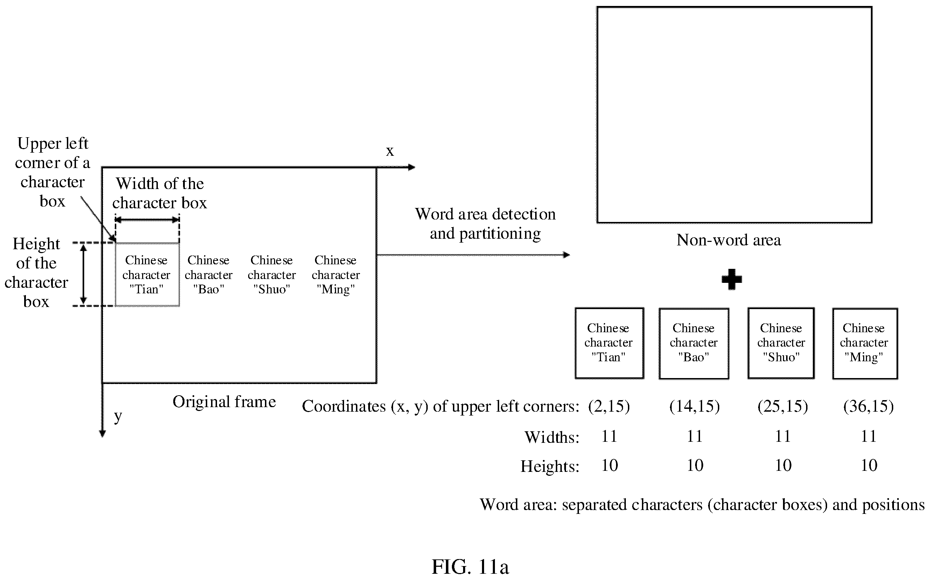

FIG. 11a is a diagram of word area detection and partitioning. As shown in FIG. 11a, an original frame includes four characters: "Chinese character "Tian", Chinese character "Bao", Chinese character "Shuo", and Chinese character "Ming"". Widths and heights of four character boxes that respectively include the four characters, and coordinates of upper left corners of the four character boxes in the original frame may be obtained through word area detection and partitioning, and the coordinates may represent coordinates of a corresponding character.

Chinese character "Tian": coordinates: (2,15), width: 11, and height: 10;
Chinese character "Bao": coordinates: (14,15), width: 11, and height: 10;
Chinese character "Shuo": coordinates: (25,15), width: 11, and height: 10; and
Chinese character "Ming": coordinates: (36,15), width: 11, and height: 10.

Pixel values in word areas respectively corresponding to the four character boxes are obtained, so that four images including the characters can be obtained, where a resolution of the image is lower than that of the original frame, and a size of the image corresponds to a size of the character box.
Then, the pixel values in the word areas respectively corresponding to the four character boxes in the original frame are filled with a preset pixel value. For example, the preset pixel value may be 0 or 1, or the preset pixel value is a pixel value of a background area in the character box other than a character pixel. This is not specifically limited. A picture obtained through re-filling does not include a character, and therefore may be referred to as a non-word picture (or a non-word area).

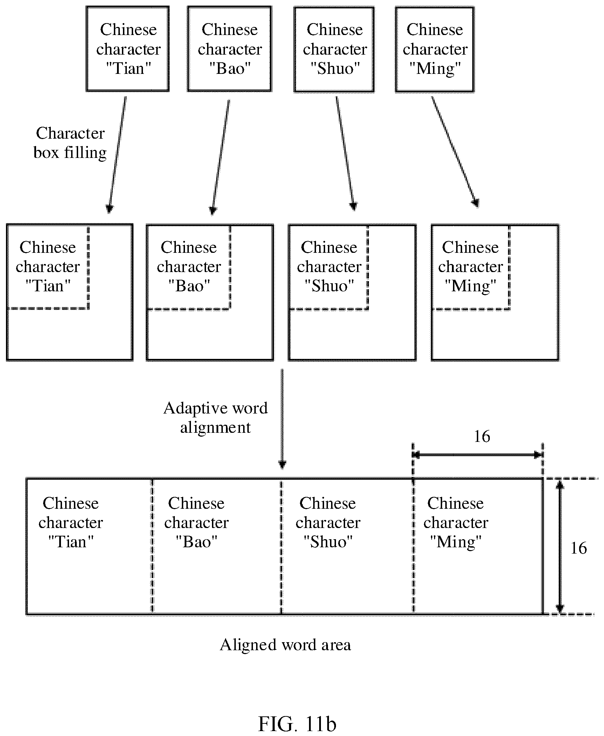

FIG. 11b is a diagram of adaptive word alignment. As shown in FIG. 11b, in an order from top to bottom and from left to right (a zigzag shape"), the original frame in FIG. 11a is used as an example, that is, in an order of "Chinese character "Tian"", "Chinese character "Bao"", "Chinese character "Shuo"", and "Chinese character "Ming"", the character boxes are filled into character filling boxes whose height and width are both K. K is selected to be 16 based on the height and width of the character box in FIG. 11a, therefore, a size of the character filling box is 16×16. In this embodiment of this application, filling is performed on a right side and a lower side of the character box to reach the size of the character filling box. A pixel value of filling may be the pixel value of the background area in the character box, or may be the preset pixel value (for example, 0 or 1). This is not specifically limited. It should be noted that a height and a width of the character filling box may be different, and are set based on a size of a CU. For example, if the size of the CU is 16, K may be one time of 16 (namely, 16) in this embodiment; if the size of the CU is 8, K may be twice of 8 (namely, 16) in this embodiment; if the size of the CU is 32, K may be one time of 32 (namely, 32) in this embodiment; or if the size of the CU is 64, K may be one time of 64 (namely, 64) in this embodiment. In addition, in the original frame, a plurality of characters in a same character row need to be filled into character filling boxes of a same size.
Character filling boxes to which characters in a same character row belong are spliced into a word area that is of the character row and that is aligned with a block partition grid. For example, four character filling boxes that respectively include "Chinese character "Tian"", "Chinese character "Bao"", "Chinese character "Shuo"", and "Chinese character "Ming"" are spliced into a row, to obtain an aligned word area (namely, a word picture) that includes the foregoing four characters.
In the foregoing process, word alignment side information needs to be output, and is transmitted to a decoder side, to restore the characters in the aligned word area to positions of the characters in the original frame. The word alignment side information is obtained by performing simple data conversion on a position of the character box, and includes the following elements (FIG. 11a and FIG. 11b are used as examples):

(1) the height H (namely, 10) and the width W (namely, 11) of the character box, and the size K (namely, 16) of the character filling box.

(2) vertical coordinates y of upper left corners of a character row: 15, 15, 15, and 15. Vertical coordinates of a same character row are the same. Therefore, vertical coordinates of a plurality of characters in a same character row may be simplified to express same information, for example, a vertical coordinate (namely, 15) of the first character of the character row and a quantity of characters (namely, 4) are recorded.

(3) horizontal coordinate x of upper left corners of a character row: 2, 14, 25, and 36. It can be learned that, differences between the horizontal coordinates of the plurality of characters are 12, 11, and 11, and the data is close to the width W of the character box. Therefore, the horizontal coordinates of the plurality of characters in the same character row may be simplified to express same information. For example, a horizontal coordinate (namely, 2) of the first character of the character row and the differences (namely, 12, 11, and 11) between the horizontal coordinates are recorded, or a horizontal coordinate (namely, 2) of the first character of the character row and a result E (namely, E1, E2, E3=[12-11], [11-11], [12-11]=1, 0, 0) obtained by performing a subtraction operation with W on the differences (namely, 12, 11, and 11) between the horizontal coordinates are recorded. Horizontal coordinates of upper left corners of the characters in the character row can be restored by recording the data. For example, horizontal coordinate of the second character=horizontal coordinate of the first character+W+E1=2+11+1=14, and the rest may be deduced by analogy.

The word alignment side information includes H, W, K, horizontal and vertical coordinates of the first character of each character row, a quantity of characters of each character row, and E. H, W, K, and the quantity of characters of each row are encoded in a binary mode. A value of E is close to 0, and an exponential Golomb encoding manner is used. For the horizontal and vertical coordinates of the first character of each character row, binary encoding may be first performed on horizontal and vertical coordinates of the first character of the first character row, and for another row, a difference between horizontal and vertical coordinates of the first character of the character row and horizontal and vertical coordinates of the first character of a previous row is calculated, and then exponential Golomb encoding is performed on the coordinate difference.

It should be noted that the foregoing manner of encoding the word alignment side information is merely an example. In this embodiment of this application, the word alignment side information may alternatively be encoded in another manner. This is not specifically limited.

In this embodiment of this application, the non-word picture and the word picture may be respectively encoded and decoded in a standard encoding/decoding manner. Details are not described herein again.

Decoder side

The decoder side decodes a bitstream in a decoding manner corresponding to the encoder side to obtain the word alignment side information.

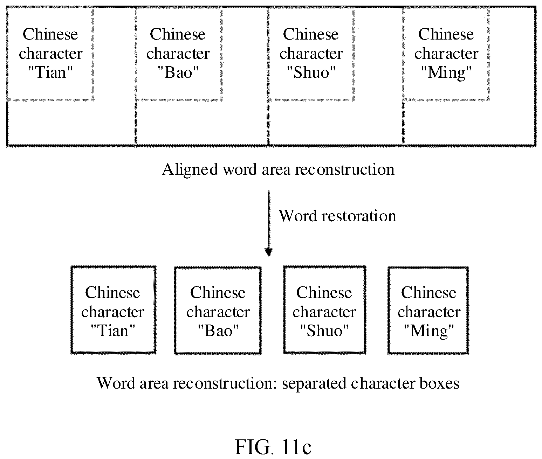

FIG. 11c is a diagram of word restoration. As shown in FIG. 11c, four K×K character filling boxes are extracted from a reconstructed aligned word area (a reconstructed word picture) based on the word alignment side information. Then, in a zigzag order, four W×H character boxes are extracted from the four character filling boxes based on the word alignment side information. The four character boxes respectively include the four characters: "Chinese character "Tian"", "Chinese character "Bao"", "Chinese character "Shuo"", and "Chinese character "Ming"".

In the zigzag order, pixel values in the four character boxes are filled into corresponding positions in the reconstructed non-word picture based on coordinates recorded in the alignment side information. For example, a pixel value in the character box including "Chinese character "Tian"" is filled into a rectangular area in which (2,15) is for an upper left corner, a width is 11, and a height is 10 in the reconstructed non-word picture; a pixel value in the character box including "Chinese character "Bao"" is filled into a rectangular area in which (14,15) is for an upper left corner, a width is 11, and a height is 10 in the reconstructed non-word picture; a pixel value in the character box including "Chinese character "Shuo"" is filled into a rectangular area in which (25,15) is for an upper left corner, a width is 11, and a height is 10 in the reconstructed non-word picture; and a pixel value in the character box including "Chinese character "Ming"" is filled into a rectangular area in which (36,15) is for an upper left corner, a width is 11, and a height is 10 in the reconstructed non-word picture. After all the character boxes are filled (which may also be referred to as spliced), a reconstructed picture including the characters may be obtained.

**Embodiment 2**

A difference from Embodiment 1 lies in that: In Embodiment 1, adaptive word alignment is performed in two directions: a width direction and a height direction, while in this embodiment, adaptive word alignment is performed only in a height direction.

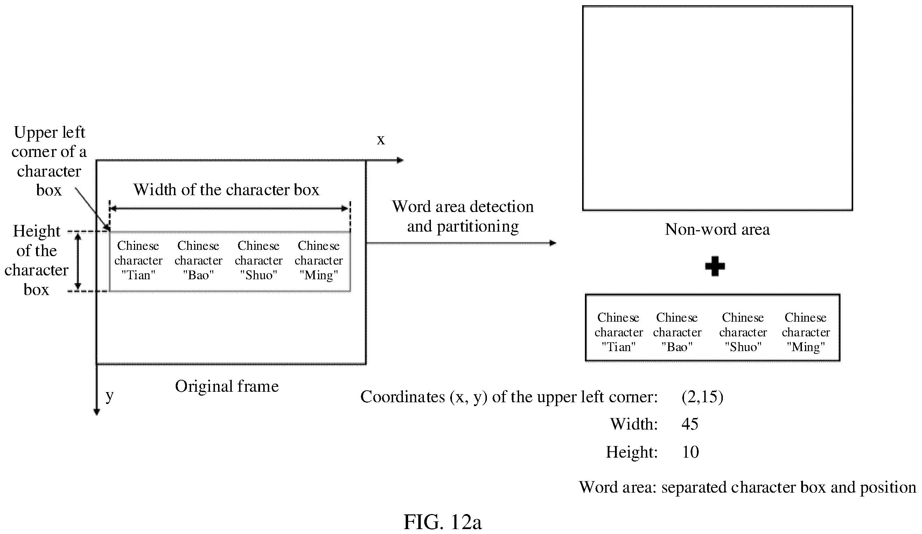

FIG. 12a is a diagram of word area detection and partitioning. As shown in FIG. 12a, an original frame includes four characters: "Chinese character "Tian", Chinese character "Bao", Chinese character "Shuo", and Chinese character "Ming"". A width (namely, 45) and a height (namely, 10) of a character box including the four characters, and coordinates (namely, (2,15)) of an upper left corner of the character box in the original frame may be obtained through word area detection and partitioning, and the coordinates may represent coordinates of a corresponding character.

A pixel value in a word area corresponding to the character box is obtained, so that an image including the four characters can be obtained, where a resolution of the image is lower than that of the original frame, and a size of the image corresponds to a size of the character box.

Then, the pixel value in the word area corresponding to the character box in the original frame is filled with a preset pixel value. For example, the preset pixel value may be 0 or 1, or the preset pixel value is a pixel value of a background area in the character box other than a character pixel. This is not specifically limited. A picture obtained through re-filling does not include a character, and therefore may be referred to as a non-word picture (or a non-word area).

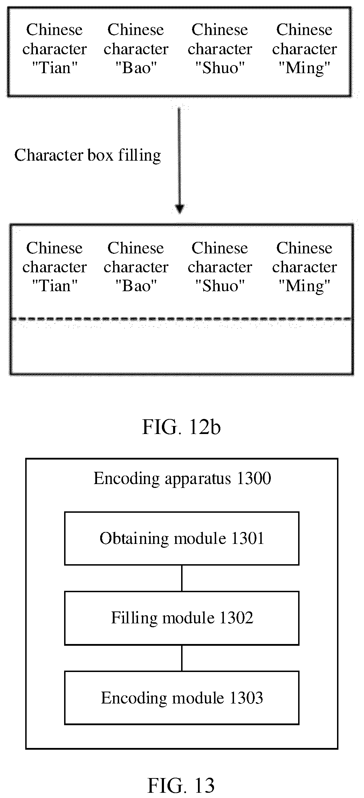

FIG. 12b is a diagram of adaptive word alignment. As shown in FIG. 12b, in an order from top to bottom, the character box is filled into a character filling box whose height is K. K is selected to be 16 based on the height of the character box in FIG. 12a, therefore, a size of the character filling box is 45×16. In this embodiment of this application, filling is performed on a lower side of the character box to reach the size of the character filling box. A pixel value of filling may be the pixel value of the background area in the character box, or may be the preset pixel value (for example, 0 or 1). This is not specifically limited. It should be noted that a height and a width of the character filling box may be different, and are set based on a size of a CU. For example, if the size of the CU is 16, K may be one time of 16 (namely, 16) in this embodiment; if the size of the CU is 8, K may be twice of 8 (namely, 16) in this embodiment; if the size of the CU is 32, K may be one time of 32 (namely, 32) in this embodiment; or if the size of the CU is 64, K may be one time of 64 (namely, 64) in this embodiment.

In the foregoing process, word alignment side information needs to be output, and is transmitted to a decoder side, to restore the characters in the aligned word area to positions of the characters in the original frame. The word alignment side information is obtained by performing simple data conversion on a position of the character box, and includes the following elements (FIG. 12a and FIG. 12b are used as examples):

(1) the height H (namely, 10) and the width W (namely, 45) of the character box, and the height K (namely, 16) of the character filling box.
(2) vertical coordinate y of an upper left corner of a character row: 15.
(3) horizontal coordinate x of an upper left corner of a character row: 2.

The word alignment side information includes H, W, K, and horizontal and vertical coordinates of the first character of the character row. H, W, and K are encoded in a binary mode. For the horizontal and vertical coordinates of the first character of the character row, binary encoding may be first performed on horizontal and vertical coordinates of the first character of the first character row, and for another row, a difference between horizontal and vertical coordinates of the first character of the character row and horizontal and vertical coordinates of the first character of a previous row is calculated, and then exponential Golomb encoding is performed on the coordinate difference.

It should be noted that the foregoing manner of encoding the word alignment side information is merely an example. In this embodiment of this application, the word alignment side information may alternatively be encoded in another manner. This is not specifically limited.

In this embodiment of this application, the non-word picture and the word picture may be respectively encoded and decoded in a standard encoding/decoding manner. Details are not described herein again.

Decoder side

The decoder side decodes a bitstream in a decoding manner corresponding to the encoder side to obtain the word alignment side information.

A 45×K character filling box is extracted from a reconstructed aligned word area (a reconstructed word picture) based on the word alignment side information. Then, a W×H character box is extracted from the character filling box based on the word alignment side information. The character box includes the four characters: "Chinese character "Tian"", "Chinese character "Bao"", "Chinese character "Shuo"", and "Chinese character "Ming"".

A pixel value in the character box is filled into a corresponding position in the reconstructed non-word picture based on coordinates recorded in the alignment side information. For example, a pixel value in the character box including "Chinese character "Tian", Chinese character "Bao", Chinese character "Shuo", and Chinese character "Ming"" is filled into a rectangular area in which (2,15) is for an upper left corner, a width is 45, and a height is 10 in the reconstructed non-word picture. After the foregoing filling (which may also be referred to as splicing) is completed, a reconstructed picture including the characters may be obtained.

**Embodiment 3**

A difference from Embodiment 2 lies in that an original frame includes a plurality of character rows. In word area detection and partitioning, a plurality of character rows are preliminarily detected. Therefore, during partitioning, the plurality of character rows need to be further partitioned to obtain a plurality of word areas, where each word area includes one character row.

Subsequently, the foregoing plurality of word areas are encoded/decoded separately in the manner of Embodiment 2. Details are not described herein again.

**Embodiment 4**

A difference from Embodiment 1 lies in that an original frame includes a plurality of character rows. In word area detection and partitioning, a plurality of character rows are preliminarily detected. Therefore, during partitioning, the plurality of character rows need to be further partitioned to obtain a plurality of character rows, and then each character row is partitioned to obtain a plurality of word areas, where each word area includes one character.

Subsequently, the foregoing plurality of word areas are encoded/decoded separately in the manner of Embodiment 1. Details are not described herein again.

FIG. 13 is an example diagram of a structure of an encoding apparatus 1300 according to an embodiment of this application. As shown in FIG. 13, the encoding apparatus 1300 in this embodiment may be used on an encoder side 20. The encoding apparatus 1300 may include an obtaining module 1301, a filling module 1302, and an encoding module 1303.

The obtaining module 1301 is configured to obtain a word area in a first picture, where the word area includes at least one character. The filling module 1302 is configured to: fill the word area to obtain a word filling area, where a height or a width of the word filling area is n times a preset size, and $n \geq 1$; and obtain a second picture based on the word filling area. The encoding module 1303 is configured to encode the second picture and word alignment side information to obtain a first bitstream, where the word alignment side information includes the height or the width of the word filling area.

In a possible implementation, the filling module 1302 is specifically configured to: obtain the height of the word filling area based on a height of the word area, where the height of the word filling area is n times the preset size; and fill the word area in a vertical direction of the word area to obtain the word filling area, where a height of filling is a difference between the height of the word filling area and the height of the word area.

In a possible implementation, the filling module 1302 is specifically configured to: obtain the width of the word filling area based on a width of the word area, where the width of the word filling area is n times the preset size; and fill the word area in a horizontal direction of the word area to obtain the word filling area, where a width of filling is a difference between the width of the word filling area and the width of the word area.

In a possible implementation, the word area includes one character; the word area includes one character row, and the character row includes a plurality of characters; or the word area includes one character column, and the character column includes a plurality of characters.

In a possible implementation, the obtaining module 1301 is specifically configured to perform character recognition on the first picture to obtain the word area.

In a possible implementation, the obtaining module 1301 is specifically configured to: perform character recognition on the first picture to obtain an intermediate word area, where the intermediate word area includes a plurality of character rows; and perform row splitting on the intermediate word area by character row to obtain the word area.

In a possible implementation, the obtaining module 1301 is specifically configured to: perform character recognition on the first picture to obtain an intermediate word area, where the intermediate word area includes a plurality of character columns; and perform column splitting on the intermediate word area by character column to obtain the word area.

In a possible implementation, the obtaining module 1301 is specifically configured to: perform character recognition on the first picture to obtain an intermediate word area, where the intermediate word area includes a plurality of character rows or a plurality of character columns; and perform row splitting and column splitting on the intermediate word area by character to obtain the word area.

In a possible implementation, the filling module 1302 is specifically configured to: when there is only one word filling area, use the word filling area as the second picture.

In a possible implementation, the filling module 1302 is specifically configured to: when there are a plurality of word filling areas, and each of the word filling areas includes one character row, splice the plurality of word filling areas from top to bottom to obtain the second picture.

In a possible implementation, the filling module 1302 is specifically configured to: when there are a plurality of word filling areas, and each of the word filling areas includes one character column, splice the plurality of word filling areas from left to right to obtain the second picture.

In a possible implementation, the filling module 1302 is specifically configured to: when there are a plurality of word filling areas, and each of the word filling areas includes one character, splice the plurality of word filling areas from left to right and from top to bottom to obtain the second picture, where a plurality of word filling areas in a same row have a same height, or a plurality of word filling areas in a same column have a same width.

In a possible implementation, the word alignment side information further includes the height and the width of the word area, and a horizontal coordinate and a vertical coordinate of a pixel in an upper left corner of the word area in the first picture.

In a possible implementation, the preset size is one of 8, 16, 32, and 64.

In a possible implementation, the filling module 1302 is further configured to fill a pixel value in the word area in the first picture with a preset pixel value to obtain a third picture; and the encoding module 1303 is further configured to encode the third picture to obtain a second bitstream.

The apparatus in this embodiment may be used to execute the technical solution of the method embodiment shown in FIG. 8. An implementation principle and technical effects of the apparatus are similar to those of the technical solution of the method embodiment shown in FIG. 8. Details are not described herein again.

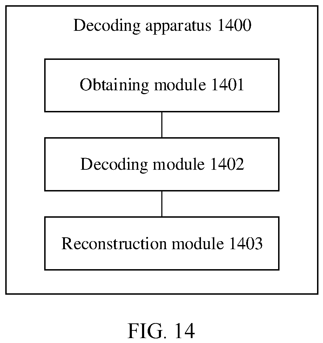

FIG. 14 is an example diagram of a structure of a decoding apparatus 1400 according to an embodiment of this application. As shown in FIG. 14, the decoding apparatus 1400 in this embodiment may be used on a decoder side 30. The decoding apparatus 1400 may include an obtaining module 1401, a decoding module 1402, and a reconstruction module 1403.

The obtaining module 1401 is configured to obtain a bitstream. The decoding module 1402 is configured to decode the bitstream to obtain a first picture and word alignment side information, where the word alignment side information includes a height or a width of a word filling area included in the first picture, the height or width of the word filling area is n times a preset size, and $n \geq 1$. The reconstruction module 1403 is configured to: obtain the word filling area based on the first picture and the height or the width of the word filling area; and obtain a word area in a to-be-reconstructed picture based on the word filling area.

In a possible implementation, the word alignment side information further includes a height and a width of the word area; and the reconstruction module 1403 is specifically configured to extract a corresponding pixel value from the word filling area based on the height and the width of the word area to obtain the word area.

In a possible implementation, the decoding module 1402 is further configured to decode the bitstream to obtain a second picture; and the reconstruction module 1403 is further configured to obtain the to-be-reconstructed picture based on the word area and the second picture.

In a possible implementation, the word alignment side information further includes a horizontal coordinate and a vertical coordinate of a pixel in an upper left corner of the word area; and the reconstruction module 1403 is specifically configured to: determine a replacement area in the second picture based on the height and the width of the word area and the horizontal coordinate and the vertical coordinate of the pixel in the upper left corner of the word area; and fill a pixel value in the replacement area with a pixel value in the word area to obtain the to-be-reconstructed picture.

In a possible implementation, the word area includes one character; the word area includes one character row, and the character row includes a plurality of characters; or the word area includes one character column, and the character column includes a plurality of characters.

In a possible implementation, the preset size is one of 8, 16, 32, and 64.

The apparatus in this embodiment may be used to execute the technical solution of the method embodiment shown in FIG. 9. An implementation principle and technical effects of the apparatus are similar to those of the technical solution of the method embodiment shown in FIG. 9. Details are not described herein again.

In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

A person of ordinary skill in the art may be aware that units and algorithm steps in the examples described with reference to embodiments disclosed in this specification may be implemented by electronic hardware or a combination of computer software and electronic hardware. Whether the functions are implemented by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing described apparatus embodiments are merely examples. For example, division into the units is merely logical function division and may be another division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separate, and components displayed as units may or may not be physical units. To be specific, the components may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of a software product. The software product is stored in a storage medium and includes several instructions for instructing a computer device (a personal computer, a server, a network device, or the like) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A word-comprising picture encoding method, comprising:

   obtaining a word area in a first picture, wherein the word area comprises at least one character;
   filling the word area to obtain a word filling area, wherein a height or a width of the word filling area is n times a preset size, and $n \geq 1$;
   obtaining a second picture based on the word filling area; and
   encoding the second picture and word alignment side information to obtain a first bitstream, wherein the word alignment side information comprises the height or the width of the word filling area.

2. The method according to claim 1, wherein the filling the word area to obtain a word filling area comprises:

> obtaining the height of the word filling area based on a height of the word area, wherein the height of the word filling area is n times the preset size; and
> filling the word area in a vertical direction of the word area to obtain the word filling area, wherein a height of filling is a difference between the height of the word filling area and the height of the word area.

3. The method according to claim 1 or 2, wherein the filling the word area to obtain a word filling area comprises:

> obtaining the width of the word filling area based on a width of the word area, wherein the width of the word filling area is n times the preset size; and
> filling the word area in a horizontal direction of the word area to obtain the word filling area, wherein a width of filling is a difference between the width of the word filling area and the width of the word area.

4. The method according to any one of claims 1 to 3, wherein the word area comprises one character; the word area comprises one character row, and the character row comprises a plurality of characters; or the word area comprises one character column, and the character column comprises a plurality of characters.

5. The method according to any one of claims 1 to 4, wherein the obtaining a word area in a first picture comprises: performing character recognition on the first picture to obtain the word area.

6. The method according to any one of claims 1 to 4, wherein the obtaining a word area in a first picture comprises:

> performing character recognition on the first picture to obtain an intermediate word area, wherein the intermediate word area comprises a plurality of character rows; and
> performing row splitting on the intermediate word area by character row to obtain the word area.

7. The method according to any one of claims 1 to 4, wherein the obtaining a word area in a first picture comprises:

> performing character recognition on the first picture to obtain an intermediate word area, wherein the intermediate word area comprises a plurality of character columns; and
> performing column splitting on the intermediate word area by character column to obtain the word area.

8. The method according to any one of claims 1 to 4, wherein the obtaining a word area in a first picture comprises:

> performing character recognition on the first picture to obtain an intermediate word area, wherein the intermediate word area comprises a plurality of character rows or a plurality of character columns; and
> performing row splitting and column splitting on the intermediate word area by character to obtain the word area.

9. The method according to any one of claims 1 to 5, wherein the obtaining a second picture based on the word filling area comprises:
when there is only one word filling area, using the word filling area as the second picture.

10. The method according to any one of claims 1 to 4 and 6, wherein the obtaining a second picture based on the word filling area comprises:
when there are a plurality of word filling areas, and each of the word filling areas comprises one character row, splicing the plurality of word filling areas from top to bottom to obtain the second picture.

11. The method according to any one of claims 1 to 4 and 7, wherein the obtaining a second picture based on the word filling area comprises:
when there are a plurality of word filling areas, and each of the word filling areas comprises one character column, splicing the plurality of word filling areas from left to right to obtain the second picture.

12. The method according to any one of claims 1 to 4 and 8, wherein the obtaining a second picture based on the word filling area comprises:
when there are a plurality of word filling areas, and each of the word filling areas comprises one character, splicing the plurality of word filling areas from left to right and from top to bottom to obtain the second picture, wherein a plurality of word filling areas in a same row have a same height, or a plurality of word filling areas in a same column have a same width.

**13.** The method according to any one of claims 1 to 12, wherein the word alignment side information further comprises the height and the width of the word area, and a horizontal coordinate and a vertical coordinate of a pixel in an upper left corner of the word area in the first picture.

**14.** The method according to any one of claims 1 to 13, wherein the preset size is one of 8, 16, 32, and 64.

**15.** The method according to any one of claims 1 to 14, wherein after the obtaining a word area in a first picture, the method further comprises:

filling a pixel value in the word area in the first picture with a preset pixel value to obtain a third picture; and encoding the third picture to obtain a second bitstream.

**16.** A word-comprising picture decoding method, comprising:

obtaining a bitstream;
decoding the bitstream to obtain a first picture and word alignment side information, wherein the word alignment side information comprises a height or a width of a word filling area comprised in the first picture, the height or the width of the word filling area is n times a preset size, and n≥1;
obtaining the word filling area based on the first picture and the height or width of the word filling area; and
obtaining a word area in a to-be-reconstructed picture based on the word filling area.

**17.** The method according to claim 16, wherein the word alignment side information further comprises a height and a width of the word area; and the obtaining a word area in a to-be-reconstructed picture based on the word filling area comprises:
extracting a corresponding pixel value from the word filling area based on the height and width of the word area to obtain the word area.

**18.** The method according to claim 17, further comprising:

decoding the bitstream to obtain a second picture; and
obtaining the to-be-reconstructed picture based on the word area and the second picture.

**19.** The method according to claim 18, wherein the word alignment side information further comprises a horizontal coordinate and a vertical coordinate of a pixel in an upper left corner of the word area; and the obtaining the to-be-reconstructed picture based on the word area and the second picture comprises:

determining a replacement area in the second picture based on the height and the width of the word area and the horizontal coordinate and the vertical coordinate of the pixel in the upper left corner of the word area; and
filling a pixel value in the replacement area with a pixel value in the word area to obtain the to-be-reconstructed picture.

**20.** The method according to any one of claims 16 to 19, wherein the word area comprises one character; the word area comprises one character row, and the character row comprises a plurality of characters; or the word area comprises one character column, and the character column comprises a plurality of characters.

**21.** The method according to any one of claims 16 to 20, wherein the preset size is one of 8, 16, 32, and 64.

**22.** An encoding apparatus, comprising:

an obtaining module, configured to obtain a word area in a first picture, wherein the word area comprises at least one character;
a filling module, configured to: fill the word area to obtain a word filling area, wherein a height or a width of the word filling area is n times a preset size, and n≥1; and obtain a second picture based on the word filling area; and
an encoding module, configured to encode the second picture and word alignment side information to obtain a first bitstream, wherein the word alignment side information comprises the height or the width of the word filling area.

**EP 4 525 443 A1**

23. The apparatus according to claim 22, wherein the filling module is specifically configured to: obtain the height of the word filling area based on a height of the word area, wherein the height of the word filling area is n times the preset size; and fill the word area in a vertical direction of the word area to obtain the word filling area, wherein a height of filling is a difference between the height of the word filling area and the height of the word area.

24. The apparatus according to claim 22 or 23, wherein the filling module is specifically configured to: obtain the width of the word filling area based on a width of the word area, wherein the width of the word filling area is n times the preset size; and fill the word area in a horizontal direction of the word area to obtain the word filling area, wherein a width of filling is a difference between the width of the word filling area and the width of the word area.

25. The apparatus according to any one of claims 22 to 24, wherein the word area comprises one character; the word area comprises one character row, and the character row comprises a plurality of characters; or the word area comprises one character column, and the character column comprises a plurality of characters.

26. The apparatus according to any one of claims 22 to 25, wherein the obtaining module is specifically configured to perform character recognition on the first picture to obtain the word area.

27. The apparatus according to any one of claims 22 to 25, wherein the obtaining module is specifically configured to: perform character recognition on the first picture to obtain an intermediate word area, wherein the intermediate word area comprises a plurality of character rows; and perform row splitting on the intermediate word area by character row to obtain the word area.

28. The apparatus according to any one of claims 22 to 25, wherein the obtaining module is specifically configured to: perform character recognition on the first picture to obtain an intermediate word area, wherein the intermediate word area comprises a plurality of character columns; and perform column splitting on the intermediate word area by character column to obtain the word area.

29. The apparatus according to any one of claims 22 to 25, wherein the obtaining module is specifically configured to: perform character recognition on the first picture to obtain an intermediate word area, wherein the intermediate word area comprises a plurality of character rows or a plurality of character columns; and perform row splitting and column splitting on the intermediate word area by character to obtain the word area.

30. The apparatus according to any one of claims 22 to 26, wherein the filling module is specifically configured to: when there is only one word filling area, use the word filling area as the second picture.

31. The apparatus according to any one of claims 22 to 25, and 27, wherein the filling module is specifically configured to: when there are a plurality of word filling areas, and each of the word filling areas comprises one character row, splice the plurality of word filling areas from top to bottom to obtain the second picture.

32. The apparatus according to any one of claims 22 to 25, and 28, wherein the filling module is specifically configured to: when there are a plurality of word filling areas, and each of the word filling areas comprises one character column, splice the plurality of word filling areas from left to right to obtain the second picture.

33. The apparatus according to any one of claims 22 to 25, and 29, wherein the filling module is specifically configured to: when there are a plurality of word filling areas, and each of the word filling areas comprises one character, splice the plurality of word filling areas from left to right and from top to bottom to obtain the second picture, wherein a plurality of word filling areas in a same row have a same height, or a plurality of word filling areas in a same column have a same width.

34. The apparatus according to any one of claims 22 to 33, wherein the word alignment side information further comprises the height and the width of the word area, and a horizontal coordinate and a vertical coordinate of a pixel in an upper left corner of the word area in the first picture.

35. The apparatus according to any one of claims 22 to 34, wherein the preset size is one of 8, 16, 32, and 64.

36. The apparatus according to any one of claims 22 to 35, wherein the filling module is further configured to fill a pixel value in the word area in the first picture with a preset pixel value to obtain a third picture; and the encoding module is further configured to encode the third picture to obtain a second bitstream.

42

37. A decoding apparatus, comprising:

an obtaining module, configured to obtain a bitstream;
a decoding module, configured to decode the bitstream to obtain a first picture and word alignment side information, wherein the word alignment side information comprises a height or a width of a word filling area comprised in the first picture, the height or the width of the word filling area is n times a preset size, and n≥1; and
a reconstruction module, configured to: obtain the word filling area based on the first picture and the height or width of the word filling area; and obtain a word area in a to-be-reconstructed picture based on the word filling area.

38. The apparatus according to claim 37, wherein the word alignment side information further comprises a height and a width of the word area; and the reconstruction module is specifically configured to extract a corresponding pixel value from the word filling area based on the height and the width of the word area to obtain the word area.

39. The apparatus according to claim 38, wherein the decoding module is further configured to decode the bitstream to obtain a second picture; and
the reconstruction module is further configured to obtain the to-be-reconstructed picture based on the word area and the second picture.

40. The apparatus according to claim 39, wherein the word alignment side information further comprises a horizontal coordinate and a vertical coordinate of a pixel in an upper left corner of the word area; and the reconstruction module is specifically configured to: determine a replacement area in the second picture based on the height and the width of the word area and the horizontal coordinate and the vertical coordinate of the pixel in the upper left corner of the word area; and fill a pixel value in the replacement area with a pixel value in the word area to obtain the to-be-reconstructed picture.

41. The apparatus according to any one of claims 37 to 40, wherein the word area comprises one character; the word area comprises one character row, and the character row comprises a plurality of characters; or the word area comprises one character column, and the character column comprises a plurality of characters.

42. The apparatus according to any one of claims 37 to 41, wherein the preset size is one of 8, 16, 32, and 64.

43. An encoder, comprising:

one or more processors; and
a memory, configured to store one or more programs, wherein
when the one or more programs are executed by the one or more processors, the one or more processors are enabled to implement the method according to any one of claims 1 to 15.

44. A decoder, comprising:

one or more processors; and
a memory, configured to store one or more programs, wherein
when the one or more programs are executed by the one or more processors, the one or more processors are enabled to implement the method according to any one of claims 16 to 21.

45. A computer-readable storage medium, comprising a computer program, wherein when the computer program is executed on a computer, the computer is enabled to perform the method according to any one of claims 1 to 21.

46. A computer program product, wherein the computer program product comprises instructions, and when the instructions are run on a computer or a processor, the computer or the processor is enabled to implement the method according to any one of claims 1 to 21.

FIG. 1A

EP 4 525 443 A1

FIG. 1B

FIG. 2

FIG. 3

400

Video coding device

410

420

Receiver
unit

Processing unit

430

Coding module

470

460 — Memory

440

Transmitter
unit

450

FIG. 4

<u>500</u>

502

Processor

518

Display

512

Code and data —— 506

Application: 1

Application: video coding

510

Application: N

Operating system —— 508

504

FIG. 5

PART_2Nx2N     PART_2NxN     PART_Nx2N     PART_NxN

PART_2NxnU     PART_2NxnD     PART_nLx2N     PART_nRx2N

FIG. 6

FIG. 7

800

Obtain a word area in a first picture, where the word area includes at least one character ⟋ 801

Fill the word area to obtain a word filling area, where a height or a width of the word filling area is n times a preset size, and $n \geq 1$ ⟋ 802

Obtain a second picture based on the word filling area ⟋ 803

Encode the second picture and word alignment side information to obtain a first bitstream, where the word alignment side information includes the height or the width of the word filling area ⟋ 804

FIG. 8

900

Obtain a bitstream ⟋ 901

Decode the bitstream to obtain a first picture and word alignment side information, where the word alignment side information includes a height or a width of a word filling area included in the first picture, and the height or the width of the word filling area is n times a preset size, and $n \geq 1$ ⟋ 902

Obtain the word filling area based on the first picture and the height or the width of the word filling area ⟋ 903

Obtain a word area in a to-be-reconstructed picture based on the word filling area ⟋ 904

FIG. 9

Original picture → Word area detection and partitioning

Word area detection and partitioning — Non-word picture → Standard encoding

Encoder side

Word area detection and partitioning — Character box → Adaptive word alignment

Adaptive word alignment — Word picture → Standard encoding

Adaptive word alignment — Side information → Side information encoding

Standard encoding → Bitstream

Standard encoding → Bitstream

Side information encoding → Bitstream

Reconstructed picture ← Area splicing

Area splicing ← Reconstructed non-word picture ← Standard decoding

Decoder side

Area splicing ← Character box ← Word restoration

Word restoration ← Reconstructed word picture ← Standard decoding

Word restoration ← Side information ← Side information decoding

Standard decoding ← Bitstream

Standard decoding ← Bitstream

Side information decoding ← Bitstream

Bitstream → Bitstream

FIG. 10

Upper left corner of a character box

Width of the character box

Height of the character box

| Chinese character "Tian" | Chinese character "Bao" | Chinese character "Shuo" | Chinese character "Ming" |

x

Original frame

y

Word area detection and partitioning →

Non-word area

✚

| Chinese character "Tian" | Chinese character "Bao" | Chinese character "Shuo" | Chinese character "Ming" |

Coordinates (x, y) of upper left corners: (2,15) (14,15) (25,15) (36,15)

Widths: 11 11 11 11

Heights: 10 10 10 10

Word area: separated characters (character boxes) and positions

FIG. 11a

Chinese character "Tian"    Chinese character "Bao"    Chinese character "Shuo"    Chinese character "Ming"

Character box filling

Chinese character "Tian"    Chinese character "Bao"    Chinese character "Shuo"    Chinese character "Ming"

Adaptive word alignment

16

Chinese character "Tian"    Chinese character "Bao"    Chinese character "Shuo"    Chinese character "Ming"    16

Aligned word area

FIG. 11b

| Chinese character "Tian" | Chinese character "Bao" | Chinese character "Shuo" | Chinese character "Ming" |
|---|---|---|---|

Aligned word area reconstruction

Word restoration

| Chinese character "Tian" | Chinese character "Bao" | Chinese character "Shuo" | Chinese character "Ming" |
|---|---|---|---|

Word area reconstruction: separated character boxes

FIG. 11c

Upper left
corner of a
character
box

x

Width of the character box

Word area detection
and partitioning

Non-word area

Height
of the
character
box

| Chinese character "Tian" | Chinese character "Bao" | Chinese character "Shuo" | Chinese character "Ming" |

| Chinese character "Tian" | Chinese character "Bao" | Chinese character "Shuo" | Chinese character "Ming" |

Original frame

y

Coordinates (x, y) of the upper left corner: (2,15)

Width: 45

Height: 10

Word area: separated character box and position

FIG. 12a

| Chinese character "Tian" | Chinese character "Bao" | Chinese character "Shuo" | Chinese character "Ming" |
|---|---|---|---|

Character box filling

| Chinese character "Tian" | Chinese character "Bao" | Chinese character "Shuo" | Chinese character "Ming" |
|---|---|---|---|
| | | | |

FIG. 12b

Encoding apparatus 1300

Obtaining module 1301

Filling module 1302

Encoding module 1303

FIG. 13

Decoding apparatus 1400

Obtaining module 1401

Decoding module 1402

Reconstruction module 1403

FIG. 14

## INTERNATIONAL SEARCH REPORT

| International application No. |
| --- |
| **PCT/CN2023/104494** |

| | |
| --- | --- |
| **A.** | **CLASSIFICATION OF SUBJECT MATTER** |
| | H04N19/154(2014.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 编码, 文字, 字符, 文本, 符号, 尺寸, 大小, 高, 宽, 相同, 划分, 分割, 同一, 分块, 图像块, 像素块, 象素块, 宏块, 编码单元, 扩展, 填充, 补充, 扩大, 预设, encode, character, letter, size, height, width, same, block, CTU, CU, CTB, CB, segment

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | CN 111918065 A (ZTE CORP.) 10 November 2020 (2020-11-10)<br>entire document | 1-46 |
| A | JP 2000152249 A (VICTOR COMPANY OF JAPAN) 30 May 2000 (2000-05-30)<br>entire document | 1-46 |
| A | JP 2004128881 A (CANON K. K.) 22 April 2004 (2004-04-22)<br>entire document | 1-46 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 October 2023** | **13 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104494**

| Patent document cited in search report | | | Publication date (day/month/year) | Patent family member(s) | | | Publication date (day/month/year) |
|---|---|---|---|---|---|---|---|
| CN | 111918065 | A | 10 November 2020 | None | | | |
| JP | 2000152249 | A | 30 May 2000 | None | | | |
| JP | 2004128881 | A | 22 April 2004 | JP | 3817506 | B2 | 06 September 2006 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210829379